Europäisches Patentamt

European Patent Office

Office européen des brevets

(19)

(11) **EP 0 704 130 B1**

(12) **EUROPEAN PATENT SPECIFICATION**

(45) Date of publication and mention
of the grant of the patent:
**02.06.1999 Bulletin 1999/22**

(21) Application number: **94906559.3**

(22) Date of filing: **10.01.1994**

(51) Int Cl.6: **H04N 1/46**

(86) International application number:
**PCT/US94/00272**

(87) International publication number:
**WO 94/30003 (22.12.1994 Gazette 1994/28)**

(54) **COLOR MATCHING SYSTEM**

FARBANPASSUNGSSYSTEM

SYSTEME D'ASSORTIMENT DE COULEURS

(84) Designated Contracting States:
**DE FR GB IT**

(30) Priority: **16.06.1993 US 78470**

(43) Date of publication of application:
**03.04.1996 Bulletin 1996/14**

(73) Proprietor: **OBJECT TECHNOLOGY LICENSING
CORP.
Cupertino, CA 95014 (US)**

(72) Inventors:
• **QUARATO, James, Anthony
Sunnyvale, CA 94087 (US)**
• **HOLT, L., Bayles
San Jose, CA 95120 (US)**
• **HARRIS, Jerry, G.
Sunnyvale, CA 94087 (US)**

(74) Representative: **Kindermann, Manfred
Patentanwalt,
Sperberweg 29
71032 Böblingen (DE)**

(56) References cited:
**EP-A- 0 209 266        EP-A- 0 313 794
EP-A- 0 378 448        EP-A- 0 398 502
EP-A- 0 448 250        GB-A- 2 073 995**

**Description**

BACKGROUND OF THE INVENTION

Field of the Invention

The present invention relates generally to operating system software architecture and, more particularly, to an operating system software architecture and method for supporting color processing.

Description of Related Art

Computer systems are information-handling systems that are designed to process a wide variety of information including text and graphic information. These computer systems, including their hardware and software, are becoming increasingly sophisticated so as to be able to process this information in color, but are still limited in their ability to support and process color information. For example, one area of limited capability of computer systems relates to interfacing with and supporting a wide variety of peripheral devices that display, print, plot or otherwise present color to a viewer under computer control. Another area is the limited ability of a computer programmer or computer user to program or process color in a "color space" of his or her choice on the computer system.

More specifically, and with respect to the one area mentioned above, several of the more prevalent color peripheral devices include displays such as computer monitors and TV screens, printers such as ink-jet, laser and photolithography printers, and plotters such as electrostatic and drum/flatbed plotters. Each of these devices may be coupled to or interface with the computer system, in which the color information that is displayed, printed or plotted is processed by the computer system's hardware, operating system software and application software.

At least two aspects of these color peripheral devices related to (1) the color space in which they operate and (2) their color device-dependency. Color space is a three-dimensional space in which each point in the space corresponds to a color. For example, RGB color space is a device color space in which each point is a color formed of the additive amounts of red (R), green (G) and blue (B) colorants. A color monitor or a TV screen typically operates in RGB color space in which light from red, green and blue phosphors on the monitor are combined to display a particular color. Another example is CYMK color space in which each point is a color formed of the subtractive amounts of cyan (C), magenta (M), yellow (Y) and black (K). Printers using ink normally operated in CYMK color space in which the ink colorants are combined to form a color on a hard copy medium. Other color spaces related to various color devices are well-known in the art.

Color device-dependency is associated with the fact that each device has its own "color gamut". A color gamut is the range of colors producible within the color space with a set of colorant phosphors, inks or other colorants of the given device. In other words, the color gamut of a given device constitutes a particular region of the visible colors that can be produced by the device. For example, an RGB color monitor manufactured by one manufacturer may have a different color gamut than an RGB color monitor manufactured by another manufacturer, or different models of color monitors manufactured by the same manufacturer may have different color gamuts, thereby making their producible colors "device-dependent". In addition, each device may have its own color "profile", which is a measure of how non-ideal the particular device is in actually producing a color called for within its gamut. Thus, for example, the same red tie displayed on two different color monitors may have a different color red appearance, thereby resulting in device dependency and color inaccuracies. For a more detailed explanation of color, color space, color gamuts and other color related principles described and illustrated in this specification, reference may be made, for example, to Principles of Color Technology, 2nd Edition, by Fred W. Billmeyer, Jr. and Max Salzman, John Wiley & Sons, 1981; Color and the Computer, by Foley et al., Addison-Wesley Publishing Co., Inc. 1990.

One feature of color processing in such prior computer systems relates to "color matching". A user of the computer system may want to use the printer to make a hard copy of a color image that appears on the color monitor, or may want to present a color image on the monitor of a hard copy image appearing on the printer. Since these peripheral devices operate in different color space and have different gamuts and profiles, the color of an image appearing on one device will not match the color appearing on the other device. However, the computer system will have a software operating system architecture that will implement a color matching scheme whereby the color appearing on one of the devices will closely, if not substantially identically, be caused to match the color transferred to the other device.

Prior software operating system architectures are limited in their color processing capability. One limitation is that the operating system architecture may not be able to support a given peripheral device functioning in a color space for which the architecture was not designed or could not be modified to support. Also, a prior architecture may be capable of supporting and matching color of a particular peripheral device, such as a color monitor, having its own color space, gamut and profile characteristics to another peripheral device, such as a particular color printer having its own such color characteristics. Nevertheless, another limitation is that if one or more different types of color monitors and printers having color characteristics different from the above-mentioned particular color monitor and printer are coupled to the computer, and/or other types of color peripheral devices are coupled to the computer, such as a plotter or a color TV camera, the prior computer system, and specifically its operating system architecture, will not be able to support color matching for any of these other different peripheral devices.

Furthermore, as to the other area mentioned above, computer users of the computer system may want to work in any number of color spaces of their choice different than the color spaces of the peripheral devices supported by the prior limited operating system architecture. For example, two color spaces in addition to RGB and CYMK color spaces are known as Luminance Unit Vector (LUV) and LUV Hue, Saturation and Lightness (HSL) color spaces. However, the computer user working on the above-described computer system having the limited operating system architecture may be able to work only in the RGB color space of the monitor or the CYMK color space of the printer, and not the other color spaces.

EP-A-0 448 250 describes a method and apparatus for processing data representing an image in a first colour space suitable for controlling a first image output device. The apparatus comprises a processor (11, 14, 17) for reversibly transforming the image into a perceptual colour space defined by lightness, colourfulness and hue components, and for modifying the lightness, colourfulness and hue components of the image in accordance with a predetermined algorithm so that all colours in the image fall within the gamut of a second image output device; and a store for storing data defining the modified and unmodified lightness, colourfulness and hue components. EP-A-0 378 448 describes a method for converting input color data (eg RGB) to output color (eg CMY). Input color data is collected from an output device and converted to predetermined color space data. The color space data is converted to output color data and output to an output device. EP-A-0 209 266 describes an image display apparatus comprising, a monitor-(6); a monitor control system (4,5) connected to the monitor (6); and a colour modifying circuit (2) for receiving from a store (1) first signals representing the colour content of pixels of an image and for generating monitor control signals for each pixel which are fed to the monitor control system. The colour modifying circuit (2) generates for any first signals representing a colour which falls outside the gamut of colours normally displayable by the monitor (6), monitor control signals representing a respective equivalent colour which falls within the monitor gamut, by applying a predetermined algorithm to the first signals. Finally, EP-A-0 313 794 describes a method and apparatus for reversibly transforming color, which is selected from a gamut of colors producible by the primaries of a color display device and converted into a perceptually uniform color space. The coordinates of the color space are readily convertible into internationally accepted standards for color measurement. Also provided, is a method for transforming the color space coordinates of a selected color into the corresponding relative primary intensity levels of the display device.

## Summary of Invention

The present invention, as defined in the claims 1 and 6, provides a unique operating system architecture and method that support color processing by avoiding the problems described above. The operating system color architecture and method support any number of different peripheral color devices, as well as any different number of color matching schemes. In other words, the color architecture of the present invention is not tied or constrained to any one peripheral device manufacturer's approach to color usage for its devices, nor is the architecture itself a color matching scheme. Moreover, as new color peripheral devices are interfaced with a given computer system having the architecture of the present invention, the manufacturer of such new devices will be assured that they will properly communicate with all existing color peripheral devices interfaced to the system.

Furthermore, the operating system color architecture and method free color users of the architecture to work in any color space that they prefer, and it is fully extensible so that as new color models or spaces may be created or required by application software programmers, they can be added to and thereby be supported by the architecture. Concomitantly, the architecture of the present invention ensures that as color models are added, they can be fully integrated into and can use any other color models that had already been added to the system.

Also, two overall types of color spaces exist, one being uncalibrated color or device dependent and the other being calibrated color or device independent. In accordance with another feature of the present invention, the architecture supports calibrated colors, together with uncalibrated colors which have their own gamuts so that each uncalibrated color knows how to make itself calibrated, i.e., how to specify their relationship to calibrated color space.

The operating system color architecture of the present invention is implemented as an object-oriented design to carry out the above-mentioned features. The general theory and techniques of object-oriented design are well-known in the art, as described, for example, in Object Oriented Design with Applications, by Grady Booch. The Benjamin/Cummings Publishing Company, 1991.

According to one aspect, the object-oriented operating system color architecture of the present invention includes an integrated color module having one interface level being a class (TColor) defining a virtual abstract base class and a container class containing uncalibrated colors, a class (TColorGamut), and other color specification parameters containing data defining the color gamut of each peripheral device interfacing with the architecture, and a class (TColorProfile) containing data defining a tonal reproduction curve for each such peripheral device; an input interface software module for inputting color data from peripheral devices to the integrated color module; and an output software interface module for outputting color data processed by the integrated color module to peripheral devices.

According to another aspect, the object-oriented software system architecture of the present invention has a class (TColor), from which all color classes descend, which is a base class and a container class for calibrated colors; a class (TDeviceColor), descending directly from the class (TColor), which is a base class and a container class for uncalibrated colors; at least one calibrated color class (TXYColor) descending directly from class (TColor) at least one uncalibrated color class (TRGBColor) descending directly from class (TDeviceColor); a class (TColorGamut) containing a template for storing color gamut information of one or more peripheral devices; and a class (TColorProfile) containing a template for storing color profile information of the one or more peripheral devices.

According to yet another aspect, the present invention constitutes a color processing system having a data processor capable of interfacing with a plurality of peripheral devices; and an object-oriented software operating system architecture which has one or more of the properties of i) processing calibrated and uncalibrated colors in relation to calibrated and uncalibrated color space, respectively; ii) transform uncalibrated colors into calibrated colors; iii) every color getting an RGB color an XYZ color from itself; iv) every color setting itself with an RGB color and an XYZ color; v) every color constructing itself from a TColor; vi) every color setting itself from a TColor; and vii) interfacing with any peripheral device which knows how to characterize itself with respect to an ideal device by having measurable tonal reproduction curves.

In yet another aspect, the method of the present invention constitutes the architecture receiving source color data from a source color device; calling a class (TColorGamut) storing data identifying the color gamuts of the source color device and a destination color device, respectively; calling a class (TColorProfile) storing data identifying the color profiles of the source color device and the destination color device, respectively; calling a class (TColorMatcher) storing a method function for matching the color of the source color device to the color of the destination color device; using the method function, the color gamut data and the color profile data of the source color device and the destination color device to provide destination color data matching the source color data; and sending the destination color data for the destination color device.

Other aspects and advantages of the present invention can be seen upon review of the figures, the detailed description and the claims which follow.

Brief Description of the Drawings

Figure 1 is a block diagram of a computer system having the operating system color architecture in accordance with a preferred embodiment;

Figure 2 is a chromatic graph illustrating color space and color gamuts in accordance with a preferred embodiment;

Figure 3 is a geometric graph illustrating a tonal reproduction curve or profile for one colorant of a peripheral device in accordance with a preferred embodiment;

Figure 4 illustrates in block diagram the basic software components in accordance with a preferred embodiment;

Figure 5 is a class diagram of the color architecture as implemented in an object-oriented programming design in accordance with a preferred embodiment;

Figure 6A and Figure 6B illustrate pictorially the transformation's of color from one color space to one or more other color spaces in accordance with a preferred embodiment;

Figure 7 illustrates CIE color matching functions in accordance with a preferred embodiment;

Figure 8 shows pictorially one example of a color-matched process carried out in accordance with a preferred embodiment;

Figure 9 is a block diagram of a preferred embodiment;

Figure 10 is a block diagram of the system components in accordance with a preferred embodiment;

Figure 11 is a block diagram of the system components in accordance with a preferred embodiment;

Figure 12 illustrates two methods for overriding color matching in accordance with a preferred embodiment;

Figure 13 is a Booch Class diagram illustrating TColorProfiles, TColors and TGImages in accordance with a preferred embodiment;

Figure 14 illustrates two color profiles, ColorGamut & ColorProfile in accordance with a preferred embodiment; and

Figure 15 illustrates the subclassing operation from the class TColorProfile for supplying color profiles to another application in accordance with a preferred embodiment; and

Figure 16 illustrates a class diagram for TColorMatcher and the three default color matching class implementations: TColorimetricColorMatcher, TAppearanceColorMatcher, and TExactColorMatcher in accordance with a preferred embodiment.

## Detailed Description of the Invention

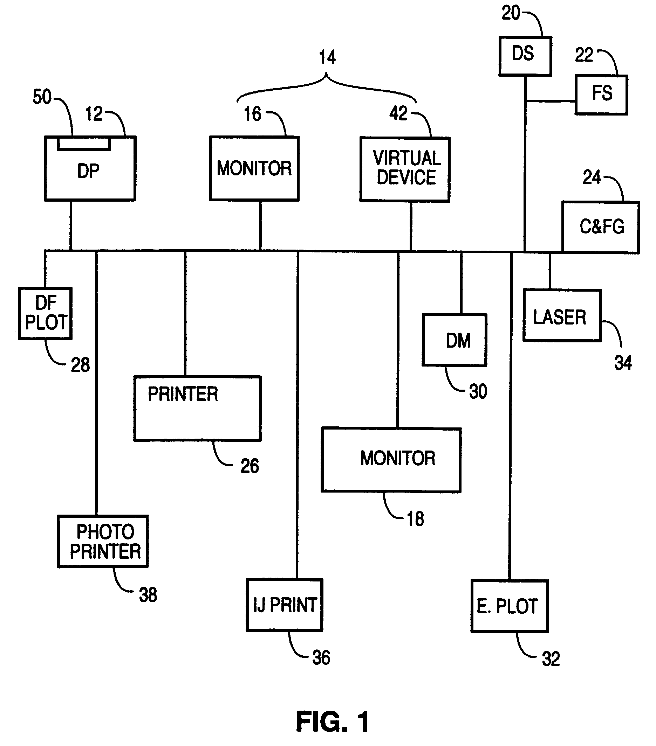

Figure 1 illustrates a computer system 10 that includes a computer or data processor 12 which may interface with one or more of a plurality of peripheral devices 14. Each of these peripheral devices 14 is a color device that can be added to or removed from interfacing with the processor 12. The peripheral devices 14 are examples of color devices that can provide color information to or receive color information from the data processor 12. Thus, for example, the color devices 14 may include a monitor 16, a monitor 18, a drum scanner 20, a flatbed scanner 22, a camera and frame grabber 24, a transfer printer 26, a drum/flatbed plotter 28, a dot matrix printer 30, an electrostatic plotter 32, a laser printer 34, an ink-Jet printer 36 and a photolithography printer 38. While only a single data processor 12 is shown, the operating system software architecture of the present invention also will support multiple processors 12 which may be coupled in a parallel hardware architectural system.

The peripheral devices 14 which interface with data processor 12 are real devices which operate under various color spaces, such as RGB color space for monitor 16 or monitor 18, and CYMK color space for printer 36. In addition, Figure 1 illustrates virtual devices 40 which may interface with processor 12 and which manipulate color in selected color spaces. For example, a virtual device 42 may manipulate color in a known color space HLS, whereas another virtual device 44 may manipulate color in another know color space xyY.

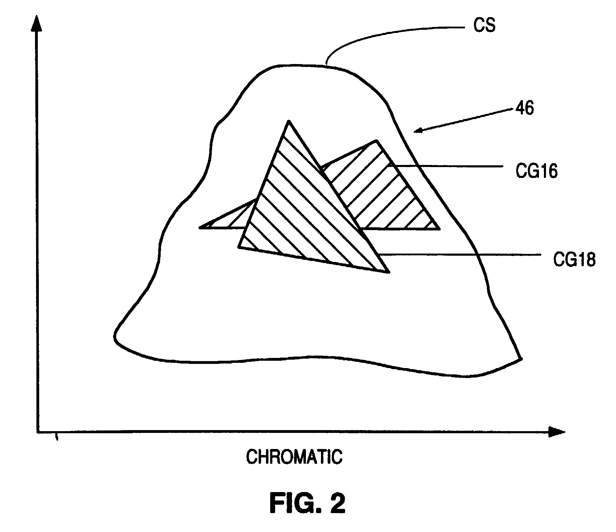

Each peripheral device 14, operating in a given color space, may have its own individual color gamut and color profile. Figures 2-3, respectively, illustrate by way of example for each of the devices 14 a chromatic graph 46 and a geometric graph 48. The two-dimensional graph 46 of Figure 2 shows a color space CS, such as RGB color space, under which, for example, monitor 16 and monitor 18 both operate. Nevertheless, the monitor 16 and monitor 18 have different color gamuts CG illustrated in Figure 2 as gamuts CG156 and CG18, respectively. The information in Figure 2 is plotted in "Commission International de l'Eclairage" (CIE) chromaticity space xyY. The third dimension Y is not shown, though color gamuts are three-dimensional objects. The graph 48 shows different color profiles or tonal reproduction curves TRC16 and TRC18 for one color, e.g., red, for the respective monitor 16 and monitor 18. These curves TRC16 and TRC18 represent a measure of how non-ideal each monitor 16 and 18, respectively, is in reproducing the color red within the respective color gamuts CG16 and CG18.

Each graph 46 and graph 48 represents color data that is stored in the data processor 12 for each of the devices 14 for use by the operating system color architecture of the present invention to carry out color processing as will be described more fully below. Thus, for example, monitor 16 may be manufactured by one company and monitor 18 may be manufactured by another company, or monitors 16 and 18 may be different models manufactured by the same company, and both may operate under RGB color space.. Nevertheless, each may have a different color gamut (CG ) and tonal reproduction curve (TRC). The same would be true for all of the other peripheral devices 14 shown on Figure 1, and, yet, the color operating system architecture of the present invention is extensible to support color processing with respect to all these different types of red and virtual devices.

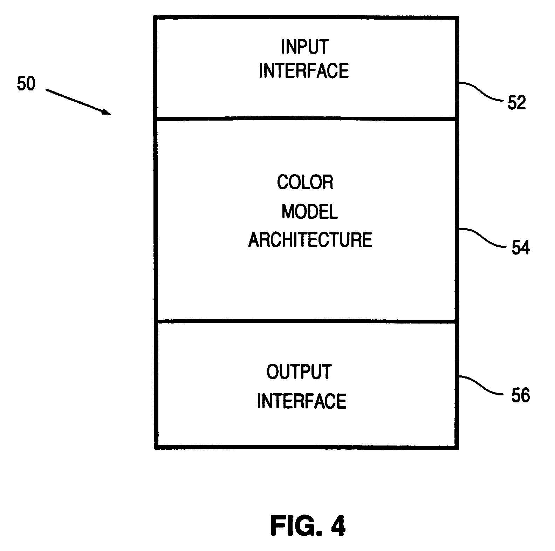

Figure 4 illustrates operating system software 50 (also shown in Figure 1) that includes an input interface module 52, a color model architecture 54 and an output interface module 56. Input interface module 52 interfaces indirectly with the peripheral devices 14 to supply color information for processing by the color model architecture 54. The output interface module 56 interfaces with the peripheral devices 14 to output color information processes by the color model architecture 54 to the peripheral devices 14.

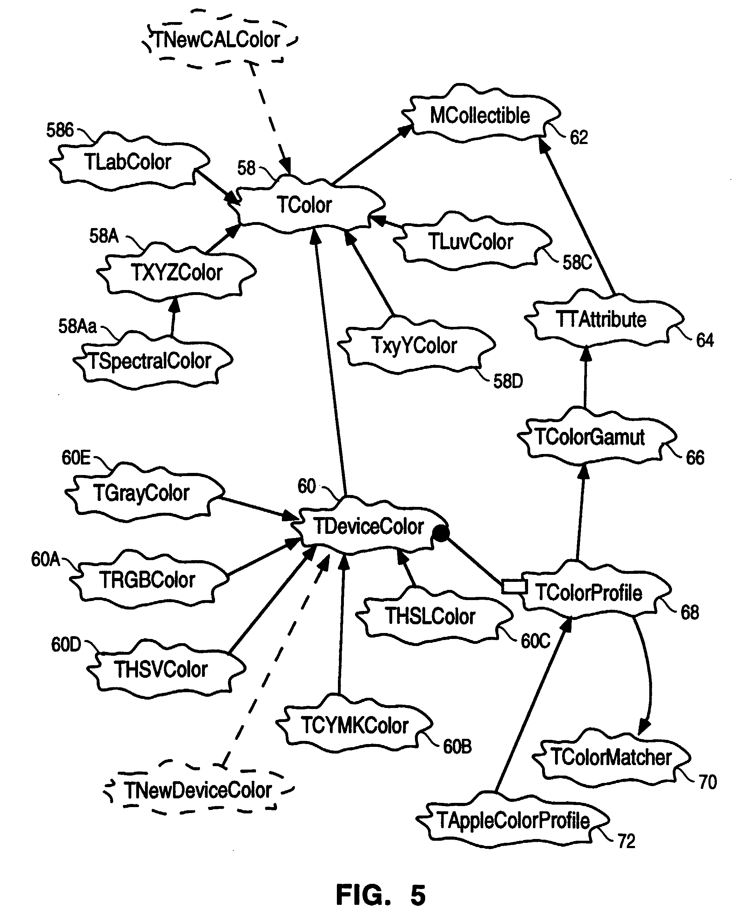

Figure 5 illustrates a class diagram of the color architecture 54 implemented in an object-oriented programming design. This class diagram shows the existence of classes and their relationships in the logical design of the architecture 54. In conventional class diagram nomenclature as set out by Booch, *supra,,* a cloud, such as the one identified TColor (Block 58), represents a class being an abstraction with crisply defined boundaries. Also, other icons shown as arrows, indicate inheritance relationships between the classes, so that, for example, the class identified as TXYZColor (Block 58A) inherits from the class TColor (Block 58) and the class identified as TSpectralColor (Block 58Aa) inherits from the class TXYZColor (Block 58A). Generally, a class or object in object-oriented design encapsulates structure (i.e., data) and behavior (i.e., method functions) which operate on the structure.

The color architecture 54 may be written in any one of a number of different object-oriented programming languages, such as the well-known languages identified as Smalltalk, Ada, CLOS, C and C++. The present specification describes the architecture 54 written in the language C++.

The architecture 54, based on object-oriented principles, will have a number of general properties as will now be described. Data are abstracted and encapsulated, that is, objects that represent color, or objects that contain color, can be represented in many different forms with varying types of data format without changing the overall architecture 54. The interfaces to the objects will remain constant while the objects themselves are abstract and independent. In object-oriented design, an interface is an outside view of a class or object while hiding the structure and behavior of the class or object.

Furthermore, all objects that descend from a color base class such as base class TColor (Block 58), described more fully below, will have the same properties as the base class and are polymorphic with respect to base class operations. This is called inheritance, which means that any color object that descends from the base class inherits the properties of the base class and can be used to represent an instance of the base class or be substituted wherever a base class is called for. This allows virtually unlimited color spaces to be represented and used by the system architecture 54 without a programmer or user knowing just exactly how data content is represented. Color spaces and color matching therefore can be extended as new color models and matching schemes are developed, which is the extensibility feature of the architecture 54.

In addition, the above properties are further amplified if a base class is represented by a template class. In the programming language C++, a template class refers to a set of classes that share the same properties, or in other words a class of classes. Several template classes are described below.

As an example, consider an object represented by the general abstract class TColor (Block 58). Suppose the content of the object is represented as four component pieces of cyan (C), magenta (M), yellow (Y) and black (K). The size and definition of these component pieces is retained by the object and is hidden from its client user. Take another TColor class object whose components are made up of National Television Standard Control(NTSC) YIQ values, again defined by the object itself. YIQ is a TV standard wherein Y stands for Intensity, I stands for In Phase, and Q stands for Quantum Phase. One color can be added to the other (for some definition of add), or matched to the other or copied simply by accessing the method functions of the interface. In pseudo-code, these three alternatives of adding, matching or copying may be written, as follows:

```
/*  These are the definitions of two different types of color classes */


class TCMYKColor : public TColor {
    ...     //Definition for CYMK color };


Class TYIQColor : public TColor {
            //Definition for YIQ color ];


/*Now instantiate one of each */


TYIQColor colorYIQ(i,y,q);//set with some predefined i,y,q values
TCMYKColor colorCMYK(c,m,y,k); //set also with some predefined values


TXYZColor colorXYZ;// some other color object


/*Add the two colors together to make a third */
colorXYZ = colorYIQ + colorCMYK;


/* convert colorCMYK to match color YIQ */
= colorYIQcolorYIQ; // the original colorCMYK is gone
at this point
```

Operations of the above type are complete and well defined because the addition operation, i.e., a method function stored in class Color (Block 58) is well defined by the base class Color( Block58). The way this add operation may be performed by the base class is first both colors CMYK and YIQ are converted or transformed to a common and well-known calibrated color (XYZ in this case). That is, color YIQ and color CMYK both get transformed to colorXYZ respectively, using a given transformation process or algorithm (which also may be stored as a method function in class Color (Block 58). These two XYZ components are then added in XYZ color space to obtain the resultant color in XYZ space. If the final color is to be XYZ color, then no further transformation will occur using a given transformation algorithm (also stored as a method function in, for example, class Color), from resultant color XYZ into the final color and stored in the corresponding class.

Furthermore, the architecture 54 also supports operations within a single color space, e.g., TXXXColor = TXXXColor 12 + TXXXColor 2, or operations between color spaces, e.g., TXXXColor = TFOOColor + TBARColor. Operations within a single color space are defined by the color space. Operations between color spaces are defined by the transformation to a calibrated color space, e.g. XYZ, operate in the calibrated color space, and then get untransformed.

Another general feature of the architecture 54 is that all of the color classes (calibrated and uncalibrated) descend from the base class Color (Block 58). This, as will be described more fully below, enables the architecture 54 to use the object-oriented principle of polymorphism on colors. Polymorphism is a concept according to which a name (such as a variable declaration) may denote objects of many different classes that are related by a common superclass, i.e., class Color (Block 58); thus, any object denoted by this name is able to respond to some comparison set of operations in different ways.

Also, the color architecture 54 represented by the class diagram of Figure 5 essentially has two levels. The first level is indicated by the class Color (Block 58 and its subclasses). As already indicated, the class Color (Block 58) is both an interface defining a virtual abstract base class and a container class which contains device independent or calibrated colors used for color transformation into other color spaces and for color matching, as will be described more fully below. The second or other level of the architecture 54 is illustrated by the class identified as TDeviceColor (Block 60 and its subclasses). This class TDeviceColor (Block 60) serves as an interface defining a virtual abstract based class and a container class for device-dependent or uncalibrated color space, as described more fully below. Each class Color (Block 58) and class TDeviceColor (Block 60) being an abstract base class, means that these classes are written such that their subclasses add to the class structure (data) and behavior (member functions).

In addition to the above-described general properties, the color architecture 54 has one or more of the following specific properties:

1. The architecture 54 processes every color in relation to a color space, calibrated or uncalibrated, such as Lab or HSL, respectively.

2. The architecture 54 processes colors that are transformed to calibrated colors.

3. Every color can "set" itself from a given uncalibrated color such as RGB color and a given calibrated color such as XYZ color.

4. Every color can "set" itself to a given uncalibrated color such as RGB color and a given calibrated color such as XYZ color.

5. Every color can "set" itself from a Color.

6. Every color can construct itself with a Color.

7. The architecture 54 can support any peripheral device 14 which knows what colors the device 14 can produce/record, i.e. what its color gamut CG is.

8. The architecture 54 can support any peripheral device 14 which knows how ideal the device 14 is, i.e., what its tonal reproduction curve TRC is.

Since every color is processed in relation to a color space this implies that the color is well defined and that a transformation may east into and out of its space. Also, since all colors are or may be transformed into a calibrated color, it is possible to transform a color from one space to another space correctly. This does not imply that a device 14 can produce that color. If the color of the device 14 which is a source, such as monitor 16, is out of gamut to the color gamut of a device 14 which is the destination, such as printer 34, then a color matching algorithm should be employed. Color matching will be non-reciprocal if the destination color gamut is not equal to or contained in the source color gamut.

In using the color architecture 54, there should be at least one color space that all colors can transform into or out of. As an example, this is chosen to be the XYZ color space, since this space contains all of the known visible colors. From a practical point, however, the choice of XYZ as the one color space that all colors can transform into and out of may not be entirely satisfactory. An additional color space that is utilized is the RGB color space. This is because almost all uncalibrated colors can transform themselves into and out of the RGB color space using well-known transformation algorithms. From a practical standpoint, therefore, the architecture 54 supports the additional processing that each color can set/get itself with or from XYZ color space and with or from RGB color space.

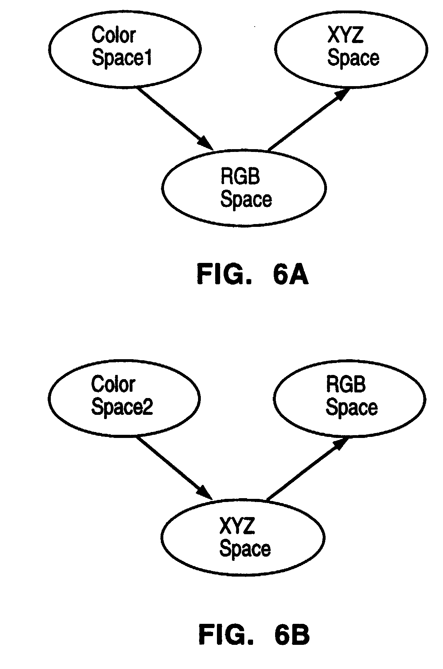

Figure 6A illustrates the transformation provided by the architecture 54 from a given uncalibrated color into a color in XYZ color space. Figure 6B illustrates pictorially the transformation provided by the architecture 54 from a given calibrated color to RGB color space. Thus, as shown in Figure 6A, an uncalibrated color in ColorSpace 1 may be transformed to an uncalibrated color such as RGB color in RGB color space using a known transformation algorithm and then into a calibrated XYZ color of XYZ color space using a known transformation algorithm. As shown in Figure 6B, a calibrated color in ColorSpace 2 may be transformed to an XYZ color in XYZ color space using a known transformation algorithm, and then into an RGB color in RGB color space using a known transformation algorithm.

Furthermore, the term "uncalibrated" color spaces, which is used throughout this specification, is used in connection with color spaces that are not CIE based. That is, "uncalibrated" refers to color spaces that are known (RGB , HSV, HSL, CMY, CMYK) but do not have a clearly defined representation in a CIE space, e.g., calibrated space such as XYZ. Colors, as mentioned above, in one of these uncalibrated spaces is usually dependent on the device 14 from which it came or on which it is displayed (rendered). For example, saturated red from one RGB space or device 14 might have the value 1.0. For this reason any two uncalibrated colors are considered to be in different color spaces even though they might be the same class. For example, if color A and color B are both RGB colors, they may actually be in different color spaces if they came from different devices 14. The architecture of the present invention automatically supports handling of these color objects, without requiring a client using them to know anything about their origin.

There will now be described briefly the color classes of the color operating system architecture 54 of the present invention shown in Figure 5. The interfaces are disclosed in more detail in the .h or header files used in the C++ programming language with file names the same as the class name (without the prefix "T").

**MCollectible (Block 62)**

The class identified as MCollectible (Block 62 in Figure 5) defines a generic object class from which all other classes are derived. It is an abstract class in that many subclasses will redefine (i.e., add to or modify) some or all of the method functions that are a part of the declaration of this class (Block 62). All of the color classes shown in Figure 5 redefine the following method functions of MCollectible (Block 62) so that they function properly:

IsEqual
operator =
operator >> = Streaming
operator << = streaming

**TAttribute (Block 64)**

Attributes are a generic term for characterizing and sharing certain object properties. Attributes provide a way for colors and color characteristics to be shared across different tasks, and to be pooled for common usage by all users of the architecture 54. Thus, class TAttribute (Block 64) is a base class for managing the sharing process, and may be included in the architecture 54 when or if such sharing is desirable.

**Class TColorGamut (Block 66)**

Class TColorGamut (Block 66) descends from class TAttribute (Block 64) and stores color gamut CG information of each peripheral device 14 interfacing with the data processor 12. As previously indicated, color gamuts are used to properly convert colors of one peripheral device (monitor 16, for example) to another peripheral device (printer 30, for example). Although colors are converted using color gamuts, this does not guarantee that the transformation is within the gamuts. To insure that colors are within gamuts, a given color matching algorithm may be used. Color matching method functions performing the matching algorithm are contained in a class TColorProfile (Block 68 described below).

A color gamut CG for the calibrated color space XYZ is defined by eight XYZ points in XYZ space. These are Cyan, Green, Yellow, Red, Magenta, Blue, Black, and White. In general each peripheral device 14: color printer, color scanner, color monitor etc., has its own color gamut CG as shown, for example, in Figure 2 and this color gamut information should be specified by the device manufacturer. The class TColorGamut (Block 66) stores two contractors, one being a null constructor which defines, for example, a 13" Apple RGB monitor manufactured by Apple Computer, Inc., Cupertino, California, and the other being a file constructor which takes as its argument a file name that contains the color gamut CG. (A constructor is a method function that creates an object and/or initializes its state.)

The class TColorGamut (Block 66) contains a template for assisting programmers to write header (referred to as .h files) to store this color gamut information. Upon adding a new peripheral device 14 to the data processor 12, as will be discussed below, its unique color gamut data may be added to the class TColorGamut (Block 66) using this template.

**TColorProfile (Block 68)**

Class TColorProfile (Block 68) descends from class Color Gamut (Block 66) and stores color profile data for each peripheral device 14 added to processor 12. In addition, class TColorProfile (Block 66) has a mechanism to "get" a given color matcher algorithm in class TColorMatcher (Block 70) (discussed more fully below in connection with color matching) for executing one or more types of color matching algorithms, which used the color gamut CG information of class TColorGamut (Block 66) and the color profile information of class TColorProfiles (Block 68). The class TColorProfile (Block 68) contains a template assisting programmers to write header files to store this color profile information as a new peripheral device 14 is coupled to the data processor 12. A class TAppleColorProfile (Block 72) which descends from class TColorProfile (Block 68) is also shown in Figure 5 (described more fully below in connection with color matching).

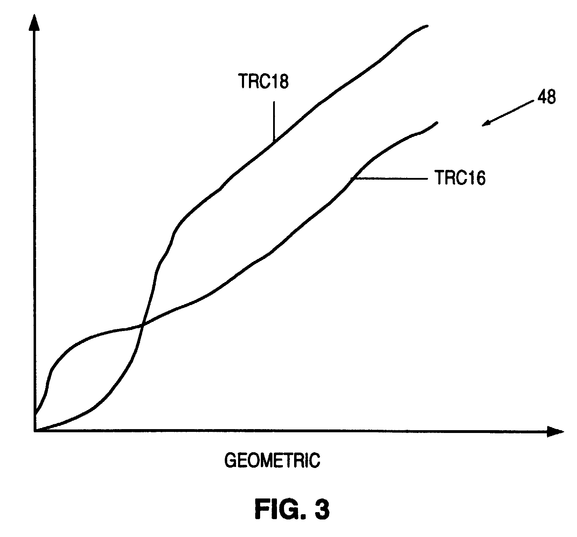

As an example, a color profile for a given peripheral device 14 comprises seven Tonal Reproduction Curves (TRCs) for seven colors, respectively: Cyan, Green, Yellow, Red, Magenta, Blue and Black. In other words, while for ease of explanation Figure 3 illustrated a TRC for only the color red for two different peripheral devices 14, class TColorProfile (Block 68) stores these seven TRCs for each respective peripheral device 14. The TRCs for each such device 14 may be measured experimentally and, as with the color gamut information specified by the manufacturer of the device 14, with the TRC data corresponding to the TRC curves then being stored in class TColorProfile (Block 68). As another example, for a color monitor such as device 16, the TRCs may default into a single curve known as a gamma correction curve.

Class TColorProfile (Block 68) also stores two constructors, one such constructor being a null constructor which defines the color profile of a given peripheral device 14, such as the color profile of a 13" RGB monitor manufactured by Apple Computer, Inc. The other constructor is a file constructor which takes as its argument a file name which contains a color profile.

## Class Color (Block 58)

As described above, class Color (Block 58) constitutes one level of architecture 54 and is both an interface defining a virtual abstract base class and a container class for calibrated colors. In the color architecture 54, since a given color can be transformed into an uncalibrated RGB color (device dependent) and/or a calibrated XYZ color (device independent(, the class Color (Block 58) has at least three pure virtual member functions, which are:

GetXYZColor(TXYZColor&aXYZColor)
GetRGBColor(RGBColor&aRGBcolor) const
SetColor(const TColor& aColor)

These method functions insure that all color classes derived from Class Color (Block 58) will support this functionality pursuant to object orient design principles. Also, class Color (Block 58) has fields for the components of given color. The field components of an XYZ color are of the type Tristimulus Coord which may take on all of the values that floating points do. The field components of an RGB color are of the type Intensity which is of a range between 0.0 and 1.0. In addition, class Color (Block 58) may have an opacity field, in which an opacity value of 1.0 means the color is purely opaque while an opacity of 0.0 means the color is transparent.

## Class TXYZcolor (Block 58A)

Class TXYZColor (Block 58A) descends from Class Color (Block 58). Every color which is derived from class Color (Block 58), pursuant to the architecture 54 of the present invention as described more fully below, is able to convert or transform itself to the calibrated XYZ color.

## Class TSpectralColor (Block 58Aa)

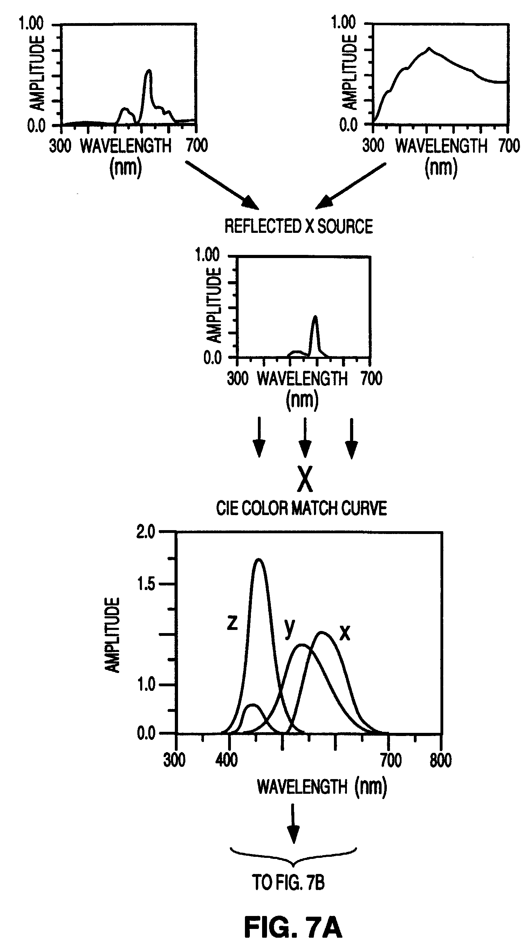

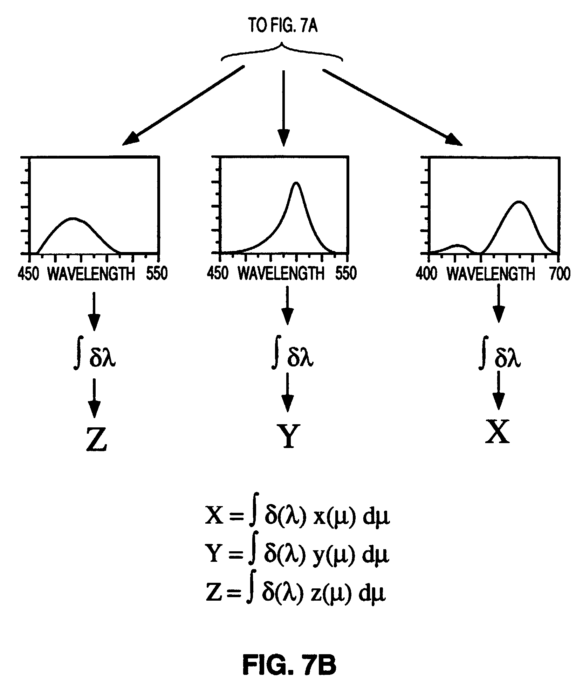

Class TSpectralColor (Block 58Aa) descends from Class TXYZ Color (Block 58A). The TSpectralColor class stores method functions that use the known three CIE color-matching functions represented by the three integral equations (1), (2) and (3), as shown in Figure 7. In these respective equations, xxx is the spectral energy distribution of the color being matched and X(u), Y(u) and Z(u) are experimentally determined color matching functions., These functions define the color matching properties of the CIE 1931 Standard Calorimetric Observer for a 2 degree field of view as described in the above-referenced materials. Thus, the CIE color-matching member functions of Class TSpectral Color (Block 58Aa) are used as weighting functions to enable X, Y, and Z primaries to be obtained from spectral power data, as shown graphically in the example of Figure 7 for calculating XYZ from the spectral information. The class TSpectralColor (Block 58Aa) stores the three CIE spectral color matching power curves X, Y and Z shown in Figure 7 as static arrays which are initialized by a null constructor for this class.

## Class TLabColor (Block 58B)

Class TLabColor (Block 58B) descends from Class Color (Block 58). TLabColor is a class which defines a uniform tristimulus device calibrated color space whose values also have been standardized internationally by the CIE. Two of the dimensions (a and b) are coordinates on a uniform chromaticity diagram. L is the psychometric lightness. The TLabColor class (Block 58B) is used to express colors in perceptually linear fashion and the perceptual distance between colors. The TLabColor class has three static fields which are used to define reference white color. Reference white may be used to transform a TLabColor to a TXYZColor. Default is reference white. Member functions of this class TLabColor (Block 58B) execute correlates of lightness, chroma, saturation and color-difference.

## Class TLuvColor (Block 58C)

Class TLuvColor (Block 58C) descends from class Color (Block 58). TLuvColor is a class which also defines a uniform tristimulus device calibrated color space whose values have been standardized internationally by the CIE. Two of the dimensions (u and v) are coordinates on a uniform chromaticity diagram. L is the psychometric lightness. The TLuvColor class is used to express colors in perceptually linear fashion and the perceptual distance between colors is proportional to the geometric distance between colors. The TLuvColor class (Block 58C) has three static fields which may be used to define reference white color, which is used to transform a TLuvColor to a TXYZColor. Default is reference white. Member functions of this class TLuvColor (Block 58C) execute correlates of lightness, chroma, saturation and color-difference.

Peripherals 14 such as industrial color measurement equipment make use of the CIE color system (the calibrated system). This CIE system allows color to be specified in terms of the light source, the object and the observer in a way that is independent of input and output devices. Accordingly, the architecture 54, if desired by a user, will transform the tristimulus value XYZ which uniquely define a color, into either color Lab coordinates or color LUV coordinates. The Lab coordinates may be used for devices 14 viewed by reflected light, while the LUV coordinates may be used for self-luminous peripheral devices 14 such as light sources.

## Class TxyYColor (Block 58D)

Class TxyYColor (Block 58D) descends from class Color (Block 58). The color space xyY can be derived from the color space XYZ of class TXYZCOLOR (Block 58A). The transformation between space XYZ and space xyY are set forth below. A detailed discussion of color transformations and the underlying mathematics is found in Color Science: Concepts and Methods, Quantitative Data and Formulae, Wyszecki et al., John Wiley and Sons (1982).

Transformation XYZ-to-xyY:

$$x = \frac{x}{x+y+z}, y = \frac{y}{x+y+z}, \quad \frac{z}{x+y+z}$$

Transformation xyY - to - XYZ

$$x = x \frac{Y}{y}, \quad Y = Y, \quad Z = (1-x-y)\frac{Y}{y}$$

## Class TDeviceColor (Block 60)

Class TDeviceColor (Block 60) descends from Class Color (Block 58) and, as mentioned above, constitutes another level of the 2-level architecture 54. Class TDeviceColor (Block 60) is both an interface defining a virtual abstract base class and a container class for uncalibrated colors in the architecture 54. TDeviceColor contains a construct reference to class TColorGamut (Block 66). This class has at least three pure virtual member functions so that all device dependent or uncalibrated colors are able to convert or transform to both an uncalibrated RGB color of class TRGBColor (Block 60A) (described below) and a calibrated XYZ color of class TXYColor (Block 58A). These member functions are:

        GetXYZColor(TXYZColor&aXYZColor)
        GetRGBColor(RGBColor&aRGBColor) const
        SetColor(const TColor& aColor)

These member functions insure that all color classes derived from TDeviceColor (Block 60) will support this functionality. As previously indicated, in order for the transformation to take place a color gamut CG which is dependent on the particular device 14 that the color is defined with respect to should be known and stored in class TColorGamut (Block 68).

## Class TRGBColor (Block 60A

Class TRGBColor (Block 60A) descends from class TDeviceColor (Block 60). The TRGBColor class defines the Cartesian coordinate based color model of red (R), green (G), and blue (B). The primaries are additive and used for most color monitors and color raster graphic system. Values of the three RGB primaries should be constrained to the range of 0.0 primary 1.0. Member functions of this class are provided to clamp the RGB primaries to this range. The RGB color space is uncalibrated; therefore RGB colors must be defined with respect to a particular color device 14 through its color gamut CG.

**Class TCMYKColor (Block 60B)**

Class TCMYKColor (Block 60B) descends from Class TDeviceColor (Block 60). The TCMYKColor class defines a color space of cyan (C), magenta (N), yellow (Y), and black (K), which are subtractive primaries used for most color hard copy devices such as printer 36. The CMYK values are calculated by first determining CMYK values present in a color. The amount of black present in the color is determined by the relationship K = minimum (CX, M, Y). K is then subtracted from CMYK values to define the CMYK values. The technique is called under color removal and enables hard copy color devices to increase output quality by printing with four instead of three colors. Values of the four primaries CYMK are constrained to the range of 0.0 primary 1.0. The class TCMYKColor (Block 60B) contains member functions which clamp the CMYK primaries to this range. Since the CMYK color model is uncalibrated, CMYK colors are defined with respect to the color gamut CG of a particular color device 14 such as the printer 36.

**Class THSLColor (Block 60C)**

Class THSLColor (Block 60C) descends from Class TDeviceColor (Block 60) and defines the well-known color model HSL. The hue (H), lightness (L), and saturation (S) color model (HSL) is defined by a double-hexcone in three dimensional space as shown in the references mentioned above. Hue is measured by the angle around the L axis. Red occurs at H = 0.0 Transversing the perimeter in a counterclockwise direction yields: red, yellow, green, cyan, blue, and magenta. A colors complement may be obtained by adding 180 degrees to the H value. Saturation is measured radially from the vertical axis, ranging from 0.0 to 1.0. Lightness is 0 for black (bottom of double hex-cone) to 1.0 (top of hex-cone). The HSL color model is uncalibrated color space and therefore HSL colors are defined with respect to a particular color peripheral device 14 through its color gamut CG stored in class Color Gamut (Block 66).

**Class TGrayColor (Block 60E)**

Class TGray (Block 60E) descends from class TDevice Color (Block 60). The TGrayColor class defines the gray scale model in which values of gray may be constrained to the range of 0.0 primary 1.0. The class contains member functions to clamp the gray values to this range. The gray scale color model is uncalibrated so that gray colors are defined with respect to the color gamut CG of a particular color peripheral device 14.

**Adding a New Color Class**

As part of the extensibility of the architecture 54, additional color classes can be added as new color models are developed. For example, assume a new calibrated color space ABC is developed. To represent a color in this calibrated color space ABC, a new color class TNewCalColor (TABColor in the example) (shown in dotted lines in Figure 5) is defined that descends and inherits from class Color (Block 58). The method functions of this new class TNewCalColor may then be written by a programmer as part of the class definition to transform color ABC to and from XYZ color space and the other color spaces provided by Class Color (Block 58).
As one specific example, Tektronix Corp. of Beaverton, Oregon, has developed a calibrated color space HVC and conversion methods for transforming this space into other space. This color space HVC is easily accommodated by the extensibility of the architecture 54 by defining a class THVCColor (not shown) that descends from class Color (Block 58) for which such published conversions or transformations are provided as a part of this class definition. The color transformation is defined by the calibrated color space being added to architecture 54, but interfaces with the rest of the architecture 54 as a Color base class object. In a similar manner, new uncalibrated color classes that are developed can be added by defining a class TNewDeviceColor (shown in dotted lines in Figure 5) descending and inheriting from class TDeviceColor (Block 60).
There will now be provided a more detailed description than given above of the method functions in class Color (Block 58) and class (Block 60A) shown in Figure 5.

**Class Color (Block 58)**

Gets

Intensity        GetOpacity();
         Simply returns the value of the opacity field.
         GetXYZColor(TXYZColor&aXYZColor) = 0;

Each subclass may override this method function. Each subclass should know how to get a XYZColor for itself.
GetRGBColor(TRGBColor& aRGBColor)
GetLuvColor(TLuvColor& aLuvColor)
GetLabColor(TLabColor& aLabColor)
GetGrayColor(TGrayColor& aGrayColor)
GetCMYKColor(TCMYKColor& aCMYKColor)
GetHISColor(THLSColor& aHLSColor)
GetxyYColor(TxyYColor& axyYColor)
GetHSVColor(THSVColor& aHSVColor)
GetYIQColor(TYIQColor& aYQColor)
GetDEV3Color(TDEV3Color& aDEV3Color)
GetCALColor(TCALColor& aCALColor)

These methods functions are stored in class Color (Block 58) for efficiency, and subclasses can override any of these. Each one of the color space subclasses that descend from class Color (Block 58) should override method functions in its own class. For instance, class THSVColor (Block 58D) should override GetHSVColor stored in class Color (Block 58) in order to avoid an intermediate conversation to a calibrated XYZ so as to save conversion time.
GetTransformedColor(TColor& aColor) const;

This method function always "gets" using the intermediate transformation to XYZ color space. Thus, this method function should be used if the colors are in the same color space, such as RGB, but have different color gamuts CG.

| Returns | |
| --- | --- |
| TRGBColor | ReturnRGBColor()const; |
| TLuvColor | ReturnLuvColor()const; |
| TLabColor | ReturnLabColor()const; |
| TGrayColor | ReturnGrayColor()const; |
| TCMYKColor | ReturnCMYKColor()const; |
| THLSColor | ReturnHLSColor()const; |
| TxyYColor | ReturnxyYColor()const; |
| THSVColor | ReturnHSVColor()const; |
| TYIQColor | ReturnMQColor()const; |
| TDEV3Color | ReturnDEV3Color()const; |
| TCALColor | ReturnCALColor()const; |

These method functions are stored in class Color (Block 58) for efficiency, but subclasses can override any of these. Each one of the color space subclasses that descends from class Color (Block 58) can override the method functions in its own class. For instance, class THSVColor (Block 60D) may override method function ReturnHSVColor in class Color (Block 58) in order to avoid an intermediate conversion to XYZ.

Index

long         FindListIndex(TColorList&         colors)const;
This method function finds the closest match in a colorlist. Subclasses can override this method function to invoke TColorList methods that take a specific brand of Color subclass.

Sets

SetOpacity (GIntensity opacity);
Sets the opacity.
ClampOpacity();
Pins the Opacity to 0.0-1.0
SetWithXYZColor(const TXYColor& aXYZColor) =0;
Each subclass can override this method function, since each color knows how to set itself with an XYZColor
. SetColor(const TColor& aColor);
This method function is used for polymorphism. Each color should be able to "set" itself polymorphically with a Color. When overriding SetColor, a client uses a color to get its XYZ equivalent, then converts that XYZ equivalent to its own format (which it already knows how to do), and sets its own data fields accordingly.
SetWithRGBColor(const TRGBColor& aRGBColor);
SetWith LuvColor(const TLuvColor& ALuvColor);
SetWithLabColor(const TLabColor& aLabColor);
SetWithGrayColor(const TGrayColor& aGrayColor);
SetWithCMYKColor(const) TCMYKColor& aCMYKColor);
SetWith HLSColor(const THLSColor& aHLSColor);
SetWithxyYColor(const TxyYColor& axyYColor);
SetWithHSVColor(const THSVColor& aHSVColor);
SetWithYIQColor(const TYIQColor& aYIQColor);
SetWithDEV3Color(const TDEV3Color& aDEV3Color);
SetWithCALColor(const TCALColor& aCALColor);

For efficiency, subclasses of class Color (Block 58 can override any of these. For instance, THLSColor (Block 60C) can override SetWithHLSColor in order to avoid an intermediate conversion to color XYZ.

## TRGBColor Pass (Block 60A)

The class TRGBColor (Block 60A) represents a typical device dependent color class storing the following method functions.

### Constructors

The following describe class constructors. When they are called in the code implementing architecture 54, they create a new instance of a TRGBColor object.
TRGBColor()
This constructor is a null constructor. The "null" implies that it needs no arguments to make an RGB color, which has two ramifications. All of the fields in the color are set to zero. fRed = fGreen = fBlue, and fOpacity = 1.0; and the color gamut CG used is also null (see constructor under description of class TColorGamut)
TRGBColor( TColor& aColor)
TRGBColor( TDeviceColor& aDeviceColor)
These constructors allow the creation of an RGBColor polymorphic from any calibrated Color such as LabColor or any uncalibrated TDeviceColor. If an uncalibrated color is used in the construction then the RGBVColor has its fields (fRed...fOpacity) transformed to the RGB color space from the aDeviceColor Space such as the color space of peripheral device 16. The RGBColor inherits the color gamut CG of the aDeviceColor. On the other hand if a Color such as Lab is used in the construction then the RGBColor ends with the fields transformed as above and the null color gamut is assigned to the new color. These constructors are also used for type casting such as: aRGBColor = (TRGBCOLOR) SomeOtherColorSpace.
TRGBColor( TRGBColor& aRGBColor)
This constructor is a copy constructor because it creates a new RGBColor object from aRGBColor. The created object has the same fields and color gamut CG as aRGBcolor.
TRGBColor(TColorGamut* the DeviceColorGamut)
All of the fields in the new color are set as follows: fRed = fGreen = fBlue =0, fOpacity =1.0 and the color gamut CG is set to the DeviceColorGamut.
TRGBColor(Red, Green,Blue, opacity = 1.0);
All of the fields in the new color are set as follows: fRed = Red, fGreen = Green, fBlue = Blue. The opacity is set to 1.0 if none is supplied or to the value supplied. The color gamut CG is set to the null color gamut.
TRGBColor(TColorGamut* DeviceColorGamut,Red,Green,Blue,opacity = 1.0);
All of the fields in the new color are set as follows: fRed = Red,fGreen = Green, fBlue =Blue. The opacity is set to 1.0 if none is supplied or to the value supplied. The color gamut is set to the DeviceColorGamut.

### Gets

GetXYZColor(TXYZColor& aXYZColor);
GetRGBColor(TRGBColor& aRGBColor);
GetGrayColor(TGrayColor& aGrayColor);
A get, as the name implies, gets the specified color object from the color object. For example, the member function GetXYZColor does the necessary transformation to the RGBColor object to return the aXYZColor.
GetComponents(Red, Green, Blue, opacity);

GetAll(Red,Green,Blue, opacity,theColorGamut);
GetClampedComponents(Red, Green, Blue,opacity);
GIntensity GetRed();
GIntensity GetGreen();
GIntensity GetBlue();

The GetComponents simply read the component values from the object and return them in variables Red, Green, Blue, and opacity.

Returns

TRGBColor        ReturnRGBColor();

The returnRGBColor returns an exact duplicate of the RGBColor object; fields and color gamut.

Sets

SetWithXYZColor( TXYZColor& aXYZColor);
SetWith RGBColor( TRGBColor& aRGBColor);
SetWithGrayColor( TGrayColor& aGrayColor);

Each SetWith, as its name implies, sets the RGB color object from the specified color object. For example, the member function SetWithXYZColor does the necessary transformation to make the RGBColor from an XYZColor and uses the color to set the RGBColor values. The color gamut CG is set to the null gamut for this particular case only.
SetAll(TColorGamut* theDeviceColorGamut,Red, Green, Blue, opacity = 1.0);
SetComponents(Red,Green,Blue,opacity = 1.0);
SetRed(GIntensity Red);
SetGreen(GIntensity Green);
SetBlue(GIntensity Blue);

These are simple sets. Values passed are used to set the object values.
SetColor( TColor& aColor);

TheSetColor is defined so that RGB Colors can be set polymorphic from any type of Color.

**RGBColor Math**

operator<=( TRGBColor&Colorl, ThGBColor&Color2);
operator< ( TRGBColor& Color 1, TRGBColor& Color2);
operator> ( TRGBColor& Colorl, TRGBColor&Color2);
operator>=( TRGBColor&Colorl, TRGBColor& Color2);
operator!= (TRGBColor&Colorl, TRGBColor& Color2);
friend TRGBColor operator + ( TRGBColor& Color 1,        TRGBColor& Color2);
friend TRGBColor operator- ( TRGBColor& Color1,  TRGBColor& Color2); friend TRGBColor operator*
( TRGBColor&Color1, float         aScalar);
friend TRGBColor operator/ (TRGBcolor& Colorl, float        aScalar);
friend TRGBColor operator* ( float aScalar, TRGBColor&        Color1);
friend TRGBColor operator/ ( flato aScalar, TRGBColor&        Color1);
TRGBColor& operator+=( TristimulusCoord aScalar);
TRGBColor& operator-=( TristimulusCoord aScalar);
TRGBColor& operator*=( float aScalar);
TRGBColor& operator/=( float aScalar);
TRGBColor& operator= (TRGBColor& Source);

These method functions override the standard operators in C++ so that they are defined properly for RGB colors. The logical operators return a TRUE if and only if the condition holds for each field component of the Colorl and Color2 including the opacity. The remaining operators perform the stated math function on each individual field component except for opacity.

Examples of Working with Color

This section contains some examples of using color with the architecture 54. Most of the examples are given using an RGBColor for the device dependent or uncalibrated color or an XYZColor for the device independent or calibrated color. The NullGamut and NullProfile, as previously mentioned, may be defined to be the gamut and profile of a standard 13" color monitor manufactured by Apple Computer, Inc.

The field components RGB of an RGBColor, as previously indicated, are of the type GIntensity which implies a range between 0.0 and 1.0. However, this constraint need not be strictly enforced. Thus, during transformations on the color, especially colors with different gamuts, it is possible to have field component values outside of this range.

Examples of Making Colors

Below are examples of six (6) constructors. If called, then the state of the object is as given as follows:

```
(1) TRGBColor aRGBColor;
     State:

    fRed = fGreen = fBlue = 0.0;
    fOpacity = 1.0;
    fColorGamut = NullGamut;


(2) TRGBColor(0.5,0.7 ,0.3, 0.5);
State:

    fRed = 0.5;fGreen = 0.7;fBlue = 0.3;
    fColorGamut = NullGamut;


(3) TRGBColor(theDeviceColorGamut, Red, Green, Blue);
State:

    fRed = Red; fGreen = Green; fBlue = Blue;
    fOpacity = 1.0 (set by default);
    fColorGamut = theDeviceColorGamut;


(4) TRGBColor aRGBColor(aRGBColor);
State:

    fRed = aRGBColor.fRed;
    fGreen = aRGBColor.fGreen;
    fBlue = aRGBColor.fBlue;
    fOpacity = aRGBColor.fOpacity;
    fColorGamut = aRGBColor->fColorGamut;


(5) TRGBColor aRGBColor(theDeviceColorGamut);
State:

    fRed = fGreen = fBlue = 0.0;
    fOpacity = 1.0;
    fColorGamut = theDeviceColorGamut;


(6) TRGBColor aRGBColor(aDeviceColor);
```

The following equivalent process takes place in this construction. Since this is a device dependent color, it has a color gamut CG. In addition all colors know how to get an RGB color from themselves. Thus,

```
TRGBColor aTempRGBColor;
aDeviceColor.GetRGBColor(aTempRGBColor);
     State:

    fRed = aTampRGBColor.fRed;
    fGreen = aTempRGBColor.fGreen;
    fBlue = aTempRGBColor.fBlue;
    fOpacity = aTempRGBColor.fOpacity;
```

fColorGamut = aDeviceColor->fColorGamut;

Examples of Sets and Gets

This section illustrates how to use some of the sets and gets to work with color. In the following examples, let the following colors be defined:
TXYZColor aXYZColor(20,80,90);
TRGBColor aRGBColor1(1.0,0.0,0),aRGBColor2(0.0,1.0,0.0)
TRGBColor aRGBColorGamut2(<GHT_ColorGamut);
Setting an XYZColor with an RGBColor
aXYZColor.SetWithRGBColor(aRGBColor1);
The color aXYZColor now has the correct XYZ values corresponding to aRGBColorl with a NullGamut. If the following is now performed:
aXYZColor.GetRGBColor(aRGBColor2);
Then the state of aRGBColor 2 is:

    fRed = 1.0;
    fGreen = 0.0;
    fBlue = 0.0;
    fOpacity = 1.0;
    fColorGamut = NullGamut;

If the following is performed:
        Getting an RGBcolor from another RGBColor
If the following is performed:
        aRGBColor1.GetRGBColor(RGBColorGamut2);
Then the state of aRGBColorGamut2 is:

    fRed = 1.0;
    fGreen = 0.0;
    fBlue = 0.0;
    fOpacity = 1.0;
    fColorGamut = NullGamut;

Example of Using Simple Math on Colors

All of the color classes in the architecture 54 have a robust set of simple math defined for them. In the examples below, the following XYZ colors are defined:
TXYZColor aXYZColor1(0.2,0.1,0.3);
TXYZColor aXYZColor2(0.3,0.2,0.2,1.0);
TXYZColor aXYZColor3;
For logical operations each individual field of the color must meet the logical condition for the expression to be evaluated to be TRUE, thus
aXYZColor1 < = aXYZColor2 would yield TRUE
aXYZColor 1 < aXYZColor2 would yield TRUE
aXYZColor1 > aXYZColor2 would yield FALSE
aXYZColor3 = aXYZColor1 + aXYZColor2;
        if aXYZColor3 before the sum operation was:

    fX = 0.0
    fY = 0.0
    fZ = 0.0;
    fOpacity = 1.0;

     aXYZColor3 after the sum operation will be:

    fX = 0.5
    fY = 0.3

fZ = 0.3;
fOpacity = 1.0;

The opacity of the color does not enter into mathematical calculations.
aXYZColor3 = aXYZColor1 -aXYZColor2;
if aXYZColor3 before the subtraction operation was:

fX = 0.0
fY = 0.0
fZ = 0.0;
fOpacity 1.0;

aXYZColor3 after the subtraction operation will be:

fX = -0.1
fY = -0.1
fZ = -0.1;
fOpacity = 1.0;

aXYZColor3 = 0.5*aXYZColor1;
if aXYZColor3 before the multiplication operation was:

fX = 0.0
fY = 0.0
fZ = 0.0;
fOpacity = 1.0;

aXYZColor3 after the multiplication operation will be:

fX = 0.1
fY = 0.05
fZ = 0.05;
fOpacity = 1.0;

aXYZColor3 = aXYZColor 1/0.5*;
if aXYZColor3 before the division operation was:

fX = 0.0
fY = 0.0
fZ = 0.0;
fOpacity = 1.0;

aXYZColor3 after the division will be:

fX = 0.4
fY = 0.2
fZ = 0.2;
fOpacity = 1.0;

Examples of Using Polymorphism with Colors

All of the color classes descend from the base class Color (Block 58). It is possible to write polymorphic functions and method functions that take as their arguments TColors. Examples to show how this may work are now given.

Determining the Hue Difference Between Colors

The method function which follows takes as input two TColors and returns the hue difference between those colors. The hue difference is a precisely defined quantity for either the Lab or Luv color spaces. The example below uses the Luv based definition.

```
Coordinate HueDifference(TColor& RefColor1, TColor& Color2)
{
//Construct two Luv Colors
TLuvColor aLuvColor1(RefColor1),aLuvColor2(Color2);
return ( RefColor1.GetHueDifference(Color2) );
}
```

Determining the Correlate of Lightness

Another example is calculating the correlate of lightness for a color.

```
Coordinate CorrelateOfLightness(TColor& Color1)
{
// Construct Luv Color
TLuvColor aLuvColor1(Color1)


return (aLuvColor1.GetCorrelateOfLightness() );
}
```

Color Matching

Individual Colors

In general, color matching occurs when an internal color, represented in some color space, calibrated or uncalibrated, is transformed into another color space, usually uncalibrated, which closely represents the specified color on a specific device. The converse is also true. In the architecture 54 of the present invention, a color matching process or function is embodied in a color matching base class TColorMatcher (Block 70) which is accessed internally in all uncalibrated objects that descend from class TDeviceColor (Block 60) through the TColorProfile reference in each such device color class object. That is, upon such reference, TColorProfile (Block 68) has a means to "get" a color matcher container in class TColorMatcher (Block 70). A sample profile that may be used by the color matcher is shown in Figure 5 as class TAppleColorProfile (Block 72).

The architecture 54 of the present invention does not specify one particular color matching algorithm over another. Using any common interchange applications programmer's interface ("API"), any color matching process can be dropped into or stored in the class TColorMatcher (Block 70) by the programmer. Consequently, any color matching mechanism can be accommodated by the architecture 54. A color matcher of class TColorMatcher (Block 70) is free to use the color gamut and color profile contained in the given colors to effect a color match. Client supplied color matchers dropped into the architecture 54 can interpret a system default color profile if one is present or private information in client-supplied color profiles, when present.

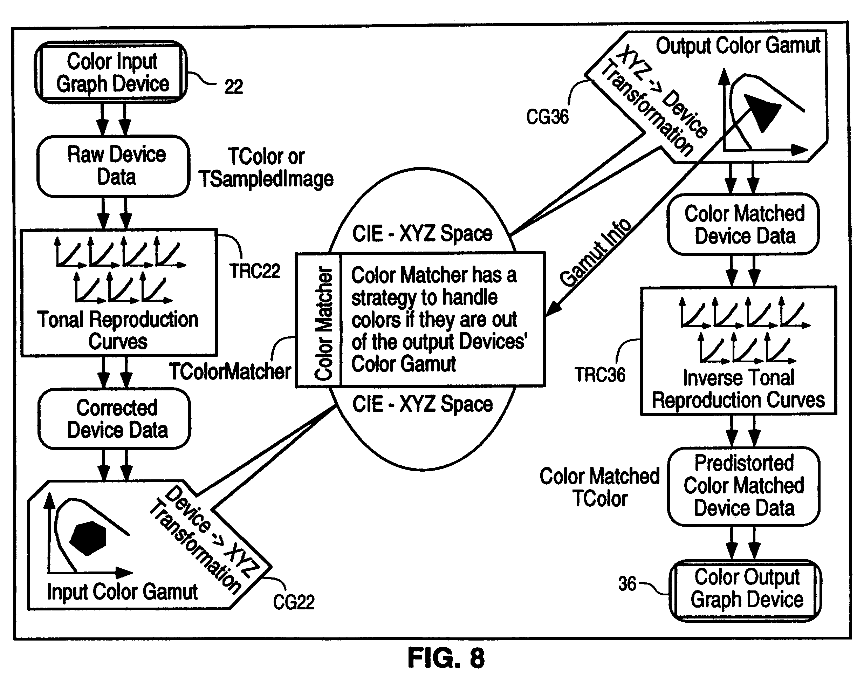

Figure 8 illustrates pictorially the manner in which individual colors can be color matched amongst a plurality of peripheral devices 14 using the architecture 54 of the present invention. The peripheral devices shown as an example are a color device 14 such as the flatbed scanner 22 operative in a Color such as RGB color space as an input or source device and a color device 14 such as a printer 36 operating in a Color such as CYMK color space as an output or destination device. Figure 8 also shows scanner tonal reproduction curves TRC22 stored as a data structure in class TColorProfile (Block 68), scanner color gamut CG22 stored as a data structure in class TColorGamut (Block 66), printer color gamut CG36 stored as a data structure in class TColorGamut (Block 66), and printer inverse tonal reproduction curves TRC36 stored as a data structure in class TColorProfile (Block 68). Also shown in Figure 8 are color space XYZ stored as a data structure in class TColorGamut (Block 66) and a color matcher of class TColorMatcher (Block 70) for color matching between RGB color space of scanner 22 and CYMK color space of printer 36.

Generally, and with reference to Figure 8, with the processor 12 being initialized by having the color gamut and profile information stored in architecture 54, raw color data from scanner 22, acting as a source of such color information, is inputted into the data processor 12. Then, the architecture 54 will utilize class TColorProfile (Block 68) to correct the raw RGB data using the tonal reproduction curves TRC22. The architecture then transforms the corrected RGB color data to XYZ color space by calling the color gamut CG22 of class TColorGamut (Block 66) and appropriate method functions. Then class TColorProfile is called to get a color matcher of class TColorMatcher (Block 70) to color match the XYZ color corresponding to the RGB color device 22 to color in XYZ color space corresponding to the CYMK color of printer 36. The matched XYZ color is then transformed to CYMK color using the color gamut CG36 and then the color matched CYMK color is predistorted by calling and using the tonal reproduction curves TRC 36 of class TColorProfile (Block 68). This predistorted color data is then transferred to the printer 36 for printing in color matched CYMK color. Thus, in accordance with the architectural features of the present invention, any peripheral device 14 can be added to processor 12 and be color matched with any other peripheral device 14.

The processing of color, including the matching of color has been described. The principles of the present invention can be extended to processing of color images in which an image may comprise not individual colors but groups or collections of colors as typically exemplified in three-color images. For example, each individual color pixel in an image may be transformed using the above described color matching process. To optimize speed of processing, the color matching process may provide an input pixel stream (in some color class format) and return an output pixel stream (in another class format).

In a preferred embodiment, three types of color matching are provided: (1) **Colorimetric,** which is the equality of spectra chromaticities and relative luminance; (2) **Appearance,** which is the deformation of source gamut to destination gamut so that the color or image looks correct; and (3) **Exact,** which is equality of chromaticities and absolute luminance. Appearance color matching is the most subjective of the three types of color matching.

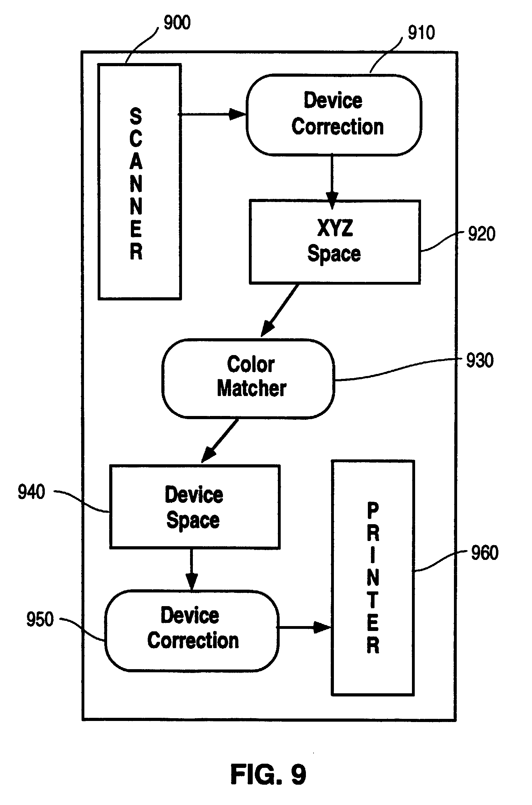

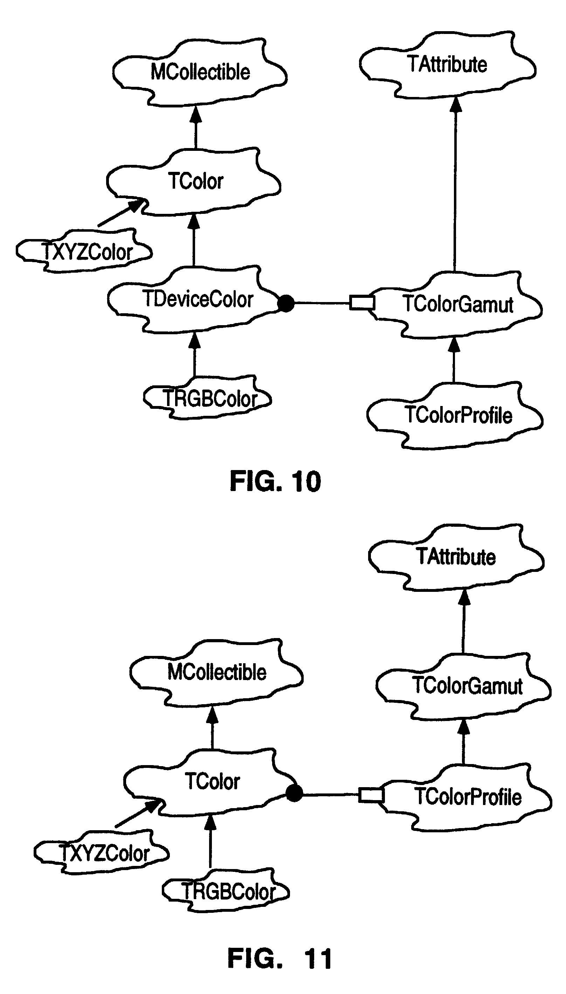

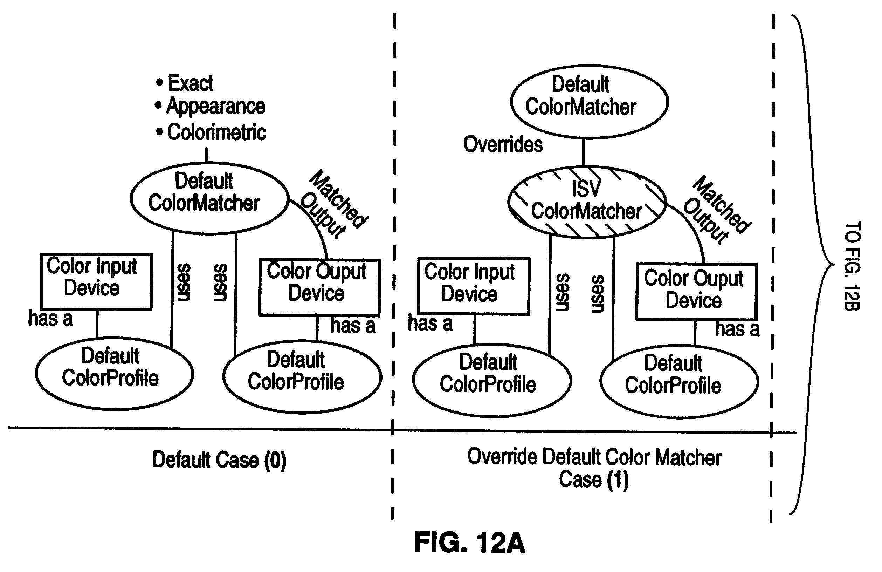

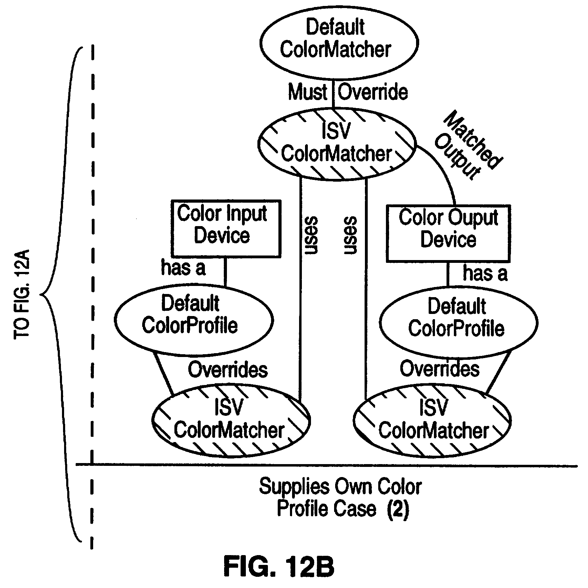

Color matching can occur at either of two levels. The TColor level is usually used for spot color while the TGImage level is usually used for images. How and where color matching is done is a fairly involved process. Figures 9, 10 and 11 show the flow of control for color matching. Figure 9 illustrates a typical configuration in accordance with a preferred embodiment. Processing commences when a document is scanned in through the scanner 900. The scanned information is corrected in function block 910, and converted into an XYZ graphic space in function block 920. Then, the color matcher transforms the information into information recognizable by the printer 960. The transformed information is stored in the device space 940 and corrected in the device correction function block 950 before being output on the printer 960. Spot color matching occurs in geometry rendering while that of Images occur in RenderImage. Fortunately, using or supplying a new color matcher is straight forward and simple. Figure 12 illustrates two ways for overriding color matching in accordance with a preferred embodiment. The default Case (0) illustrates the processing that occurs if no override of the default color matching is taken. Exact color appearance or color metric color matching is processed if no override is present. If an Independent Software Vendor (ISV) overrides the default color matcher Case (1), then the ISV supplied color matcher uses the default ColorProfile. If an ISV supplies a ColorMatcher and a ColorProfile, then processing occurs as shown in Case(2).

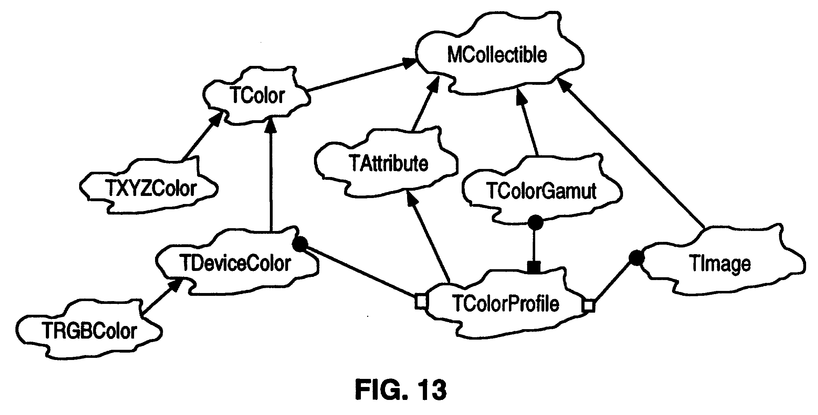

A Booch color class diagram is shown in Figure 13. The color classes on a preferred embodiment correspond to color spaces in the real world. Each color class knows how to convert itself into and out of an RGB color and an XYZ color as illustrated in Figure 13. Referring to Figure 13, colors that descend directly from TColor are calibrated colors, which means that if the color's component values are known then the color is known absolutely. An example of a calibrated color is the XYZColor.

Input/Output color hardware devices, such as the scanner 900 and the printer 960 of Figure 9 have an inherent deficiency because the devices only produce a subset of the colors which the human visual system can perceive. DeviceColor's colors, which are input/output from real world devices, are not in general calibrated unless some additional information is associated with the color. The additional information in a preferred embodiment is referred to as a ColorProfile for the device. An example of a color profile is illustrated in Figure 13.

IMAGE PROCESSING

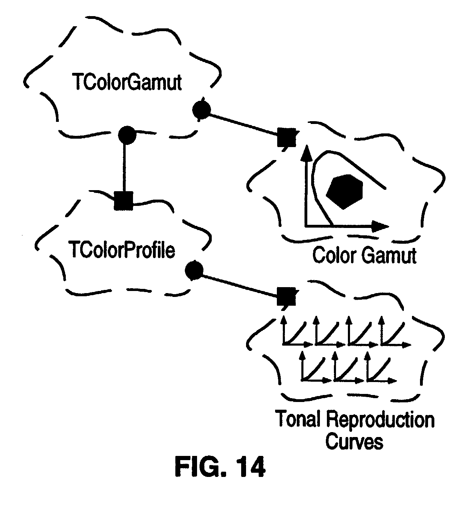

For image processing, color matching takes place not between individual colors but rather between TGImages. A primative for images is the TGImage. Like colors, TGImages have a reference to a color profile. Figure 14 illustrates two color profiles, ColorGamut & ColorProfile in accordance with a preferred embodiment.

COLOR MATCHING ENABLEMENT

A user can turn color matching on or off at the control panel level. If color matching is enabled, the user can select one of the default color matchers provided by the operating system: Colorimetric, Appearance, or Exact. At the application level the default color matcher can be overridden by creating a matcher and letting the SceneBundle adopt it as discussed below. Then, the system has control of what kind of color matching is employed.

In addition the application must allow a user to select a color profile to use for each device other than the default device.

Color Gamuts and Profiles

Figure 14 is a color profile comprising data shown graphically in accordance with a preferred embodiment. Each device color and image has a reference to a color profile. A color profile defines what colors can be produced/ input (a ColorGamut) on the device and how well that device can produce those colors (Tonal Reproduction Curves). Color profiles, in addition to describing a device, must also contain enabling information for converting back and forth between XYZ Colors and RGB Colors. This is an important fact because applications which desire to override the default color matching must supply their own color profiles for the color device. While color matching is important, it must be done consistent with existing color architectures.

Overriding Operating System ColorProfile

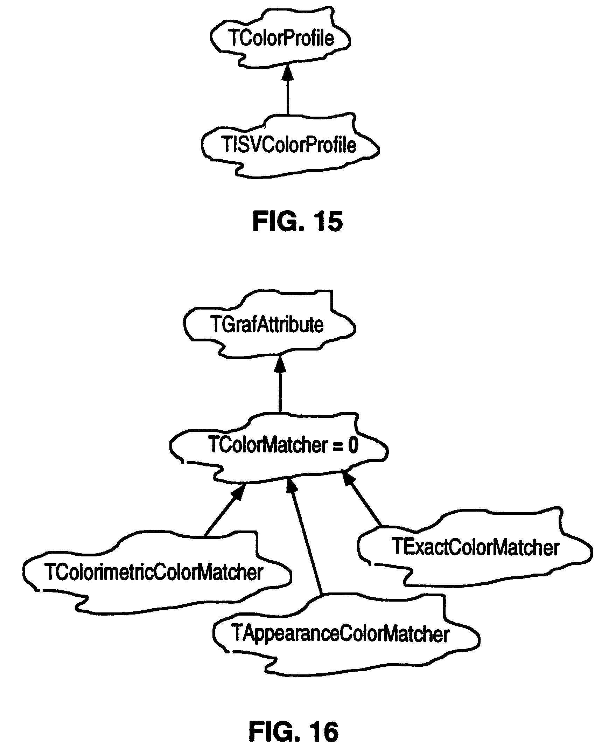

Figure 15 illustrates the subclassing operation from the class TColorProfile for supplying color profiles to another application in accordance with a preferred embodiment. Subdassing from TColorProfile ensures an acceptable default behavior should a subclassed ColorMatcher encounter a color profile which it does not understand. Although this makes the overridden profiles larger they are not significantly larger as the STANDARD color profile objects are small.

The important methods in TColorProfile for this discussion are:

```
TColorProfile(const TColorGamut* theColorGamut);
virtual void ConvertRGBtoXYZ(const TRGBColor& aRGBColor,
        TXYZColor& aConvertedXYZColor)const;
virtual void ConvertXYZtoRGB(const TXYZColor& aXYZColor,
        TRGBColor& aConvertedRGBColor)const;
```

An ConvertRGBtoXYZ and ConvertXYZtoRGB methods are virtual so that they can be overridden to work with a supplied color profile. If these methods are NOT overridden, then transformations between RGB and XYZ are based on the DEFAULT transformations.

COLOR MATCHER CLASS

An object in a preferred embodiment which performs the color matching is a ColorMatcher. ColorMatchers, in a preferred embodiment, must be reentrant. Although there is no stored state in the ColorMatcher, ColorMatchers will in fact generate a state which can be stored in the color cache (DeviceCache). Color caches used in color matching are stored in the GrafDevice.

The Color Matching opportunity can be broken into two parts: (1) the color profiles which represent the data and (2) the ColorMatcher which represents the color matching algorithm which operates on that data. Color matching is accomplished by mapping the input device's color profile to the output device's color profile. Once this transformation is identified, then it is applied to either a TColor or a TGImage.

Figure 16 illustrates a class diagram for TColorMatcher and the three default color matching class implementations: TColorimetricColorMatcher, TAppearanceColorMatcher, and TExactColorMatcher in accordance with a preferred embodiment.

TColorMatcher is an abstract base class with three important pure virtual methods which must be overridden. These are:

```
virtual void ColorMatch(const TColor& theColor, TColor& theMatchedColor, const TColorCache* theColorCache) =0;
virtual void ColorMatch(const TGImage& theImage, TGImage& theMatchedImage, const TColorCache* theColor-
Cache) =0 ;
virtual TColorCache* CreateColorCache(const TColorProfile& Source, const TColorProfile& Destnation,const TColor-
Cache* theColorCache ) =0 ;
```

Each ColorMatcher must provide a ColorMatch method that can match a TColor and a TGImage. If for some reason the source and the matched color (image) are the same then nothing happens since any color or image is automatically matched to itself. Since color matcher must be reentrant, the cache is passed into all three methods.

DEFAULT COLOR MATCHING

Whether color matching happens or not during rendering is determined by conditions in the SceneBundle. Shown below is a TSceneBundle class definition.

```
class TSceneBundle: public MCollectible {
public:
...
virtual void AdoptColorMatcher (TColorMatcher* Matcher ) ;

virtual TColorMatcher* OrphanColorMatcher() ;


private:
TColorMatcher* fColorMatcher;  nil during Construction.
...
}
```

During construction, a pointer to the TColorMatcher is set to the color matcher that the user has chosen as default at the control panel level. Color matching occurs in CopyBits in the rendering pipeline.
The following pseudo code fragment shows how the default color matching would happen:

```
// default color matcher has been selected by the user.
TSceneBundle mySceneBundle;
        ...


// Create all Colors and or TGImages with STANDARD color profiles
        ...


theGrafPort.BeginFrame(mySceneBundle);
        ...


// Color Matching will occur on every Draw in graf port
        Draw Object 1
        Draw Object 2
            •

            •

            •
        Draw Object n
theGrafPort.EndFrame();
        ...
```

Overriding Default Color Matching

A preferred embodiment provides two ways to override default color matching. First, a set of STANDARD ColorProfiles are used and overridden in part by a user ColorMatcher. In the second case, a user can define a set of ColorProfiles and override the default ColorMatcher. The following pseudo code illustrates the steps that would be necessary for the second case.

```
// Defining and implementing ColorProfiles for the source and destination colors.


class TISVColorPriofile:public TColorProfile{


public:
```

```
TISVColorPriofile(const TText& FileName, const TColorGamut* theDefaultGamut);
virtual void ConvertRGBtoXYZ(const TRGBColor& aRGBColor,
            TXYZColor& aConvertedXYZColor)const;

virtual void ConvertXYZtoRGB(const TXYZColor& aXYZColor,
            TRGBColor& aConvertedRGBColor)const;
   ...

other methods...}
```

```
//  Define your own ColorMatcher class.

class TISVColorMatcher: public TColorMatcher{
public:
TISVColorMatcher();

virtual void ColorMatch(const TColor& theColor, TColor& theMatchedColor, const
TColorCache* theColorCache );

virtual void ColorMatch(const TGImage& theImage, TGImage& theMatchedImage,
const TColorCache* theColorCache );

virtual TColorCache* CreateColorCache(const TISVColorProfile& aSource, const
TISVColorProfile& aDestination, TColorCache* theColorCache );
   ...

other methods...}
```

```
// create color profiles from information in File1 and File2

TISVColorProfile aSourceProfile(File1,theDefaultGamut);
TISVColorProfile aDestinationProfile(File2,theDefaultGamut);

// create the color matcher and cache
```

```
TISVColorMatcher* aColorMatcher;
aColorMatcher = new TISVColorMatcher();
aColorMatcher->CreateColorCache(aSourceProfile, aDestination,aColorMatcher)

// create the colors from your source profile

TRGBColor SourceColor( aSourceProfile,1.0,.5,.7);
TRGBColor DestinationColor( aDestinationProfile );

// create the SceneBundle and have the matching done

TSceneBundle mySceneBundle;

mySceneBundle.AdoptColorMatcher( aColorMatcher );

theGrafPort.BeginFrame(mySceneBundle);
        ...

        // Color Matching will occur on every Draw in graf port
        Draw Object 1
        Draw Object 2
            •
            •
            •
        Draw Object n
theGrafPort.EndFrame();
        ...
```

## Claims

1. A color matching system for converting color input signals of a first color space produced by an input device (22) into color output signals of a second color space for application to an output device (36) having device characteristics, the system comprising:

    (a) input conversion means (TRC22, CG22) responsive to the color input signals for generating a first set of corresponding color signals within a calibrated color space;

    (b) gamut means (CG36) for storing color signals in memory in a third color space reproducible by the output device (36) and for generating information representing the output color gamut transformed into the calibrated color space;

(c) matching means (TColorMatcher) responsive to the first set of color signals within the calibrated color space and the generated information (Gamut Info) for generating a second set of color signals within the calibrated color space that are within the transformed output color gamut;

(d) output conversion means (CG36) for converting the second set of color signals in the calibrated color space into signals in the third color space; and

(e) output correction means (TRC36) responsive to the color signals in the third color space and to the output device characteristics for generating color output signals within the second color space for application to the output device (36).

2. A system as recited in claim 1, wherein the output conversion means (CG36) comprises functions in an object created from class information (60, 60A, 60B, 60C, 60D, 60E) in the memory which class information represents the third color space.

3. A system as recited in claim 1, wherein the input conversion means (TRC22, CG22) comprises tonal reproduction data specific to the input device (22) and logic (TRC22) for applying the tonal reproduction data to the input color signals.

4. A system as recited in claim 1, wherein the first color space is an uncalibrated color space and wherein the input conversion means comprises means responsive to the input color signals for converting the input color signals into RGB color signals in RGB color space and means responsive to the RGB color signals for transforming the RGB color signals into XYZ color signals in calibrated XYZ color space.

5. A system as recited in claim 1, wherein the second color space is uncalibrated and wherein the output conversion means (CG36) includes means responsive to the second set of color signals for transforming the second set of color signals into XYZ color signals in calibrated color space and for transforming the XYZ color signals into CYMK color signals in uncalibrated CYMK color space.

6. A method for converting color input signals of a first color space produced by an input device (22) into color output signals of a second color space for application to an output device (36) having device characteristics, the method operating in a computer with a memory and comprising the steps of:

(a) generating from the color input signals a first set of corresponding color signals within a calibrated color space;

(b) generating information (Gamut Info) from color signals stored in memory in a third color space reproducible by the output device (36) in order to represent the output color gamut transformed into the calibrated color space;

(c) using the generated information (Gamut Info) and the first set of color signals within the calibrated color space to generate a second set of color signals within the calibrated color space which second set of signals are within the transformed output color gamut;

(d) converting the second set of color signals in the calibrated color space into signals in the third color space; and

(e) generating color output signals within the second color space using the color signals in the third color space and the output device characteristics for application to the output device (36).

7. A method as recited in claim 6, wherein step (d) comprises the step of:

(d1) using functions in an object created from class information (60, 60A, 60B, 60C, 60D, 60E) in the memory which class information represents the third color space to convert the second set of color signals in the calibrated color space into signals in the third color space.

8. A method as recited in claim 6, wherein step (a) comprises the step of:

(a1) applying tonal reproduction data to the input color signals to generate the first set of corresponding color signals within a calibrated color space.

9. A method as recited in claim 6, wherein the first color space is an uncalibrated color space and wherein step (a) comprises the steps of:

(a2) converting the input color signals into RGB color signals in RGB color space; and

(a3) transforming the RGB color signals into XYZ color signals in calibrated XYZ color space.

10. A method as recited in claim 6, wherein the second color space is uncalibrated and step (d) comprises the steps of:

(d2) transforming the second set of color signals into XYZ color signals in calibrated color space; and

(d3) transforming the XYZ color signals into CYMK color signals in uncalibrated CYMK color space.

## Patentansprüche

1. Ein Farbanpassungssystem zur Konvertierung von Farbeingangssignalen eines ersten Farbraumes, die durch eine Eingabevorrichtung (22) erzeugt werden, in Farbausgangssignale eines zweiten Farbraumes zur Zuführung zu einer Ausgabevorrichtung (36), die eine Vorrichtungscharakteristik aufweist, das System umfaßt:

(a) Eingangs-Konvertierungsmittel (TRC22, CG22), die auf die Farbeingangssignale ansprechen zum Erzeugen eines ersten Satzes von entsprechenden Farbsignalen in einem kalibrierten Farbraum;

(b) Skalenmittel (CG36) zum Speichern von Farbsignalen im Speicher in einem dritten Farbraum, die durch die Ausgabevorrichtung (36) reproduzierbar sind, und zum Erzeugen von Informationen, die eine in den kalibrierten Farbraum transformierte Ausgangs-Farbskala darstellen;

(c) Vergleichsmittel, die auf den ersten Satz von Farbsignalen in dem kalibrierten Farbraum und die erzeugte Informationen (Gamut Info) ansprechen zum Erzeugen eines zweiten Satzes von Farbsignalen in dem kalibrierten Farbraum, die sich in der transformierten Ausgangs-Farbskala befinden;

(d) Ausgangs-Konvertierungsmittel (CG36) zum Konvertieren des zweiten Satzes von Farbsignalen in dem kalibrierten Farbraum in Signale im dritten Farbraum; und

(e) Ausgangs-Korrekturmittel (TR36), die auf die Farbsignale in dem dritten Farbraum und die Vorrichtungscharakteristik der Ausgabevorrichtung ansprechen zum Erzeugen von Farbausgangssignalen innerhalb des zweiten Farbraumes zur Zuführung zu der Ausgabevorrichtung (36).

2. Ein System nach Anspruch 1, worin die Ausgangs-Konvertierungsmittel (CG36) Funktionen in einem Objekt umfassen, das von Klasseninformationen (60, 60A, 60B, 60C, 60D, 60E) in dem Speicher erzeugt wird, die den dritten Farbraum darstellen.

3. Ein System nach Anspruch 1, worin die Eingangs-Konvertierungsmittel (TRC22, CG22) tonale Reproduktionsdaten, die für die Eingabevorrichtung (22) spezifisch sind, und Logik (TRC22) umfassen zur Zuführung der tonalen Reproduktionsdaten zu den Farbeingangssignalen.

4. Ein System nach Anspruch 1, worin der erste Farbraum ein unkalibrierter Farbraum ist und worin die Eingangs-Konvertierungsmittel Mittel umfassen, die auf die Farbeingangssignale ansprechen zum Konvertieren der Farbeingangssignale in RBG Farbsignale im RBG Farbraum, und Mittel umfassen, die auf die RBG Farbsignale ansprechen zum Transformieren der RBG Farbsignale in XYZ Farbsignale im kalibrierten XYZ Farbraum.

5. Ein System nach Anspruch 1, worin der zweite Farbraum unkalibriert ist und worin die Ausgangs-Konvertierungsmittel (CG36) Mittel umfassen, die auf den zweiten Satz von Farbsignalen ansprechen zum Transformieren des zweiten Satzes von Farbsignalen in XYZ Farbsignale im kalibrierten Farbraum und zum Transformieren der XYZ Farbsignale in CYMK Farbsignale im unkalibrierten CYMK Farbraum.

**6.** Ein Verfahren zur Konvertierung von Farbeingangssignalen eines ersten Farbraumes, die durch eine Eingabevorrichtung (22) erzeugt werden, in Farbausgangssignale eines zweiten Farbraumes zur Zuführung zu einer Ausgabevorrichtung (36), die eine Vorrichtungscharakteristik aufweist, das Verfahren wird in einem einen Speicher aufweisenden Computer ausgeführt und umfaßt die Schritte:

(a) Erzeugen aus den Farbeingangssignalen einen ersten Satz von entsprechenden Farbsignalen in einem kalibrierten Farbraum;

(b) Erzeugen von Informationen (Gamut Info) aus im Speicher gespeicherten Farbsignalen in einem dritten Farbraum, die durch die Ausgabevorrichtung (36) reproduzierbar sind, um die in den kalibrierten Farbraum transformierte Ausgangs-Farbskala darzustellen;

(c) Verwenden der erzeugten Informationen (Gamut Info) und des ersten Satzes von Farbsignalen in dem kalibrierten Farbraum zum Erzeugen eines zweiten Satzes von Farbsignalen in dem kalibrierten Farbraum, die sich in der transformierten Ausgangs-Farbskala befinden;

(d) Konvertieren des zweiten Satzes von Farbsignalen in dem kalibrierten Farbraum in Signale im dritten Farbraum; und

(e) Erzeugen von Farbausgangssignalen innerhalb des zweiten Farbraumes unter Verwendung der Farbsignale im dritten Farbraum und der Vorrichtungscharakteristik zur Zuführung zu der Ausgabevorrichtung (36).

**7.** Ein Verfahren nach Anspruch 6, worin Schritt (d) den Schritt umfaßt:

(d1) Verwenden von Funktionen in einem Objekt, das von einer Klasseninformation (60, 60A, 60B, 60C, 60D, 60E) in dem Speicher erzeugt wird, die den dritten Farbraum darstellt, zum Konvertieren des zweiten Satzes von Farbsignalen im kalibrierten Farbraum in Signale in dem dritten Farbraum.

**8.** Ein Verfahren nach Anspruch 6, worin Schritt (a) den Schritt umfaßt:

(a1) Anwenden tonaler Reproduktionsdaten auf die Farbeingangssignale zum Erzeugen des ersten Satzes von entsprechenden Farbsignalen in einem kalibrierten Farbraum.

**9.** Ein Verfahren nach Anspruch 6, worin der erste Farbraum ein unkalibrierter Farbraum ist und worin Schritt (a) die Schritte umfaßt:

(a2) Konvertieren der Farbeingangssignale in RGB Farbsignale im RGB Farbraum; und

(a3) Transformieren der RGB Farbsignale in XYZ Farbsignale im kalibrierten XYZ Farbraum.

**10.** Ein Verfahren nach Anspruch 6, worin der zweite Farbraum unkalibriert ist und worin Schritt (d) die Schritte umfaßt:

(d2) Transformieren des zweiten Satzes von Farbsignalen in XYZ Farbsignale im kalibrierten Farbraum; und

(d3) Transformieren der XYZ Farbsignale in CYMK Farbsignale im unkalibrierten CYMK Farbraum.

## Revendications

**1.** Système de correspondance de couleurs pour convertir des signaux d'entrée de couleurs d'un premier espace de couleurs produit par un dispositif d'entrée (22) en signaux de sortie de couleurs d'un second espace de couleurs pour leur application à un dispositif de sortie (36) ayant des caractéristiques de dispositif, le système comprenant :

a) des moyens de conversion d'entrée (TRC22, CG22) sensibles aux signaux d'entrée de couleurs pour générer un premier ensemble de signaux de couleurs correspondants dans un espace de couleurs calibré,
b) des moyens de gamme (CG36) pour emmagasiner des signaux de couleurs en mémoire dans un troisième espace reproductible par le dispositif de sortie (36) et pour générer des informations représentant la gamme de couleurs de sortie transformées dans l'espace de couleurs calibré,

c) des moyens de correspondance (TColorMatcher) sensibles au premier ensemble de signaux de couleurs dans l'espace de couleurs calibré et aux informations générées (Gamut Info) pour générer un second ensemble de signaux de couleurs dans l'espace de couleurs calibré qui soit dans la gamme des couleurs de sortie,

d) des moyens de conversion de sortie (CG36) pour convertir le second ensemble de signaux de couleurs dans l'espace de couleurs calibré en signaux dans le troisième espace de couleurs, et

e) des moyens de correction de sortie (TRC36) sensibles aux signaux de couleurs dans le troisième espace de couleurs et aux caractéristiques du dispositif de sortie pour générer des signaux de sortie de couleurs dans le second espace de couleurs pour leur application au dispositif de sortie (36).

2. Système tel que défini dans la revendication 1, dans lequel les moyens de conversion de sortie (CG36) comprennent des fonctions dans un objet créé à partir d'informations de classe (60, 60A, 60B, 60C, 60D, 60E) en mémoire représentant le troisième espace de couleurs.

3. Système te que défini dans la revendication 1, dans lequel les moyens de conversion d'entrée (TRC22, CG22) comprennent des données de reproduction tonale spécifiques au dispositif d'entrée (22) et une logique (TRS22) pour appliquer les données de reproduction tonale aux signaux de couleurs d'entrée.

4. Système te que défini dans la revendication 1, dans lequel le premier espace de couleurs est un espace de couleurs non calibré et dans lequel les moyens de conversion d'entrée comprennent des moyens sensibles aux signaux de couleurs d'entrée pour convertir les signaux de couleurs d'entrée en signaux de couleurs RGB dans un espace de couleurs RGB et des moyens sensibles aux signaux de couleurs RGB pour transformer les signaux de couleurs RGB en signaux de couleurs XYZ dans un espace de couleurs calibré XYZ.

5. Système te que défini dans la revendication 1, dans lequel le second espace de couleurs n'est pas calibré et dans lequel les moyens de conversion de sortie (CG36) comprennent des moyens sensibles au second ensemble de signaux de couleurs pour transformer le second ensemble de signaux de couleurs en signaux de couleurs XYZ dans un espace de couleurs calibré et pour transformer les signaux de couleurs XYZ en signaux de couleurs CYMK dans un espace de couleurs CYMK non calibré.

6. Méthode pour convertir des signaux d'entrée de couleurs d'un premier espace de couleurs produit par un dispositif d'entrée (22) en signaux de sortie de couleurs d'un second espace de couleurs pour leur application à un dispositif de sortie (36) ayant des caractéristiques de dispositif, la méthode étant mise en oeuvre dans un ordinateur comportatnt une mémoire et comprenant les étapes de :

a) générer à partir des signaux d'entrée de couleurs un premier ensemble de signaux de couleurs correspondants dans un espace de couleurs calibré,

b) générer des informations (Gamut Info) à partir de signaux de couleurs emmagasinés en mémoire dans un troisième espace reproductible par le dispositif de sortie (36) de façon à représenter la gamme de couleurs de sortie transformées dans l'espace de couleurs calibré,

c) utiliser les informations générées (Gamut Info) et le premier ensemble de signaux de couleurs dans l'espace de couleurs calibré pour générer un second ensemble de signaux de couleurs dans l'espace de couleurs calibré qui soit dans la gamme des couleurs de sortie,

d) convertir le second ensemble de signaux de couleurs dans l'espace de couleurs calibré en signaux dans le troisième espace de couleurs, et

e) générer des signaux de sortie de couleurs dans le second espace de couleurs en utilisant les signaux de couleurs dans le troisième espace de couleurs et les caractéristiques du dispositif de sortie pour leur application au dispositif de sortie (36).

7. Méthode telle que définie dans la revendication 6, dans laquelle l'étape d) comprend l'étape de :

d1) utiliser des fonctions dans un objet créé à partir d'informations de classe (60, 60A, 60B, 60C, 60D, 60E) en mémoire, lesdites informations représentant le troisième espace de couleurs pour convertir le second ensemble de signaux de couleurs dans l'espace de couleurs calibré en signaux dans le troisième espace de couleurs.

8. Méthode telle que définie dans la revendication 6, dans laquelle l'étape a) comprend l'étape de

a1) appliquer des données de reproduction tonale aux signaux de couleurs d'entrée pour générer le premier ensemble de signaux de couleurs correspondants dans un espace de couleurs calibré.

9. Méthode telle que définie dans la revendication 6, dans laquelle le premier espace de couleurs est un espace de couleurs non calibré et dans lequel l'étape a) comprend les étapes de :

a2) convertir les signaux de couleurs d'entrée en signaux de couleurs RGB dans un espace de couleurs RGB, et

a3) transformer les signaux de couleurs RGB en signaux de couleurs XYZ dans un espace de couleurs calibré XYZ.

10. Méthode telle que définie dans la revendication 6, dans laquelle le second espace de couleurs n'est pas calibré, et l'étape d) comprend les étapes de :

d2) transformer le second ensemble de signaux de couleurs en signaux de couleurs XYZ dans un espace de couleurs calibré, et

d3) transformer les signaux de couleurs XYZ en signaux de couleurs CYMK dans un espace de couleurs CYMK non calibré.

**FIG. 1**

CS

46

CG16

CG18

CHROMATIC

**FIG. 2**

FIG. 3

INPUT
INTERFACE

50

52

COLOR

MODEL

ARCHITECTURE

54

OUTPUT

INTERFACE

56

## FIG. 4

FIG. 5

FIG. 6A

FIG. 6B

REFLECTED X SOURCE

X

CIE COLOR MATCH CURVE

TO FIG. 7B

**FIG. 7A**

TO FIG. 7A

450 WAVELENGTH 550        450 WAVELENGTH 550        400 WAVELENGTH 700

$\int \delta\lambda$          $\int \delta\lambda$          $\int \delta\lambda$

Z          Y          X

$$X = \int \delta(\lambda) \, x(\mu) \, d\mu$$
$$Y = \int \delta(\lambda) \, y(\mu) \, d\mu$$
$$Z = \int \delta(\lambda) \, z(\mu) \, d\mu$$

**FIG. 7B**

**FIG. 8**

EP 0 704 130 B1

**FIG. 9**

MCollectible

TAttribute

TColor

TXYZColor

TDeviceColor

TColorGamut

TRGBColor

TColorProfile

**FIG. 10**

TAttribute

MCollectible

TColorGamut

TColor

TColorProfile

TXYZColor

TRGBColor

**FIG. 11**

**FIG. 12A**

- Exact
- Appearance
- Colorimetric

Default ColorMatcher

Matched Output

Color Input Device

has a

Default ColorProfile

uses   uses

Color Ouput Device

has a

Default ColorProfile

Default Case (0)

Default ColorMatcher

Overrides

ISV ColorMatcher

Matched Output

Color Input Device

has a

Default ColorProfile

uses   uses

Color Ouput Device

has a

Default ColorProfile

Override Default Color Matcher Case (1)

TO FIG. 12B

FIG. 12B

**FIG. 13**

**FIG. 14**

**FIG. 15**

**FIG. 16**